# EUROPÄISCHE PATENTSCHRIFT

(11) **EP 3 848 678 B1**
(45) Veröffentlichungstag und Bekanntmachung des Hinweises auf die Patenterteilung: **26.07.2023**
(21) Anmeldenummer: 20210107.7
(22) Anmeldetag: 26.11.2020
(51) Int. Cl.: G01F 1/667, G01F 15/00

(54) **MESSKANAL UND VERFAHREN ZUM RÄUMLICHEN ANORDNEN EINER SENSORKOMPONENTE ODER SENSORSCHAR IN EINEM MESSKANAL**
MEASURING CHANNEL AND METHOD FOR SPATIALLY ARRANGING A SENSOR COMPONENT OR SET OF SENSORS IN A MEASURING CHANNEL
CANAL DE MESURE ET PROCÉDÉ DE MISE EN PLACE D'UN COMPOSANT DE CAPTEUR OU D'UN ENSEMBLE CAPTEUR DANS UN CANAL DE MESURE

(30) Priorität: 29.11.2019 DE 102019132552
(43) Veröffentlichungstag der Anmeldung: 14.07.2021
(73) Patentinhaber: Samson Aktiengesellschaft, 60314 Frankfurt am Main (DE)
(72) Erfinder: Krüger, Marcel, 61137 Schöneck (DE); Merscher, Michael, 63322 Rödermark (DE); Richter, Gaetano, 63477 Maintal (DE); Krause, Sebastian, 63486 Bruchköbel (DE)
(74) Vertreter: Schmid, Nils T.F.

(56) Entgegenhaltungen:
- EP-A1- 2 278 280
- EP-A2- 2 982 948
- WO-A1-2016/025919
- WO-A1-2018/132870
- DE-A1-102013 105 407
- US-A1- 2006 059 999
- US-A1- 2016 116 316
- US-B2- 8 490 498

## Beschreibung

Gegenstand der Erfindung ist ein Verfahren zum räumlichen Anordnen wenigstens einer Sensorkomponente in einem Messkanal. Die Erfindung kann auch ein Verfahren zum räumlichen anordnen wenigstens einer Sensorschar umfassend wenigstens zwei Sensorkomponenten in einem Messkanal betreffen. Gegenstand der Erfindung ist außerdem ein Messkanal für ein Prozessfluid einer prozesstechnischen Anlage, wie ein Kraftwerk, eine petrochemische Anlage, eine Lebensmittel verarbeitende Anlage oder dergleichen, mit einer zylinderhülsenförmigen Kanalwand. Ferner betrifft die Erfindung ein Stellventilgehäuse für ein Stellventil einer prozesstechnischen Anlage. Die Erfindung kann auch ein Stellventil zum Einstellen einer Prozessfluidströmung einer prozesstechnischen Anlage betreffen.

Messkanäle für Prozessfluides von prozesstechnischen Anlagen sind grundsätzlich bekannt. Solche Messkanäle sind ausgestattet mit Sensorkomponenten zum Bestimmen von einer Messgröße oder mehreren Messgrößen des Prozessfluides. Eine Prozessfluid Messgröße bzw. Messgröße des Prozessfluides kann beispielsweise Strömungsgeschwindigkeit, Dichte, Dichtegradient, Volumenstrom, Massestrom, Temperatur, Druck, insbesondere dynamischer Druck oder statischen Druck, oder dergleichen sein.

Bei bekannten Messkanälen ist es üblich, dass Sensorkomponenten zumindest abschnittsweise in das prozessfluiddurchströmte Kanalinnere hineinragen. Solche Sensoren können zum Beispiel den Druck, die Temperatur oder den Durchfluss des Prozessmediums messen. Allerdings stören die hervorragenden Sensorkomponenten die Prozessfluidströmung und können inhomogene Strömungsverhältnisse verursachen, die die Messgenauigkeit beeinträchtigen. Dies ist insbesondere dann störend, wenn die Sensorkomponente zum Erfassen einer fluidkinematischen Messgröße des Prozessfluides vorgesehen ist. Unter fluidkinematischen Messgrößen sind solche Messgrößen zu verstehen, welche sich auf die Bewegung des Prozessfluides beziehen, beispielsweise Strömungsgeschwindigkeit, Volumenstrom oder Massestrom.

Ein Messkanal mit Sensorkomponenten zum Erfassen von fluidkinematischen Messgrößen des Prozessfluides ist beispielsweise in EP 0 639 776 A1 beschrieben. Bei einem Messkanal gemäß EP 0 639 776 A1 sind in einem geradlinigen, zylindrischen Messkanal mehrere Ultraschall-Sensoren als aktive Sensorkomponenten sowie gegebenenfalls Spiegel als passives Sensorkomponenten angeordnet, um die Prozessfluidgeschwindigkeit richtungs- und orientierungsabhängig zu bestimmen. In dem Messkanal kann eine durchschnittliche Prozessfluid-Flussgeschwindigkeit und/oder ein Prozessfluid-Durchfluss bestimmt werden anhand der Wegzeit-Differenz von Schallwellen, die zwischen den Sensoren einerseits in Strömungsrichtung und andererseits entgegen der Strömungsrichtung übertragen werden. Für ein vorbestimmtes Prozessfluid ist die Ausbreitungsgeschwindigkeit der Schallwellen in einem stationären Fluiden bekannt. Schallwellen, welche sich mit einer Prozessfluidströmung bewegen, haben eine entsprechend erhöhte Geschwindigkeit, wohingegen Schallwellen, die sich entgegen der Prozessfluidströmung bewegen, eine entsprechend verringerte Geschwindigkeit haben. Gemäß EP 0 639 776 A1 kann beispielsweise mit einer Sensorschar in Längsrichtung des Kanal die durchschnittliche Strömungsgeschwindigkeit in Längsrichtung erfasst werden. Ferner kann mit einer zweiten Sensorschar, deren Sensorkomponenten in Umfangsrichtung entlang des Kanals verteilt sind, erfasst werden, welche Geschwindigkeit das Prozessfluid in Strömungsrichtung hat.

Eine Voraussetzung für genaue Messungen kann eine präzise Positionierung einer Sensorkomponente relativ zu dem Körper des Messkanals sein. Besondere Anforderungen stellen sich an Messkanäle, bei denen mehrere Sensorkomponenten zu einer zusammenwirkenden Sensorschar abschnittsweise paarweise oder in Gruppen von mehr als drei Komponenten zusammengefasst sind. In der Regel erfolgt die Ausrichtung der Sensorkomponenten einer Sensorschar relativ zu einander zu Ungunsten der Positionierung der einzelnen Sensorkomponenten relativ zu dem Messkanal. Die Anordnung der Sensorkomponenten relativ zueinander ist für eine ordnungsgemäße Funktion Sensorschar Unabdingbar.

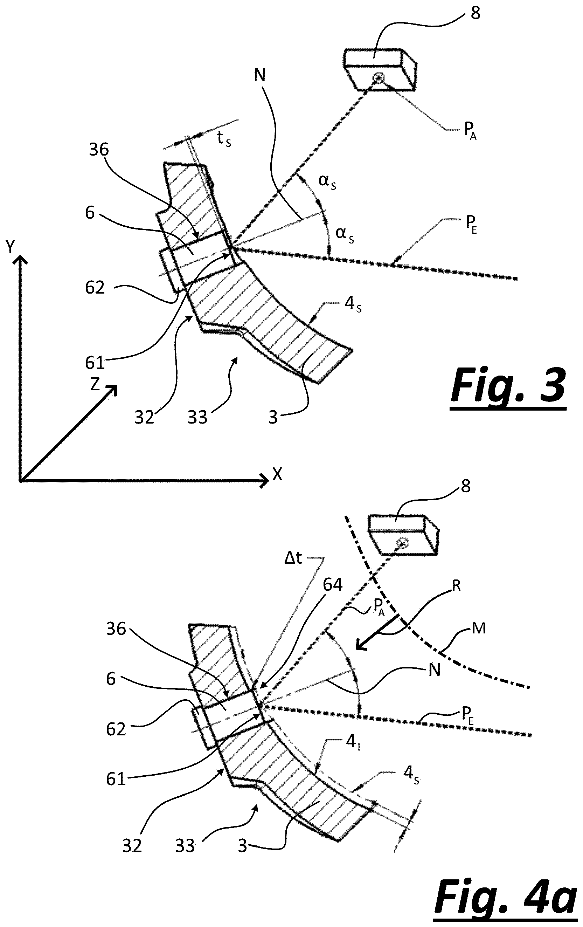

Wie in EP 0 639 776 A1 zu erkennen, ist es üblich, Sensorkomponenten mit einer länglichen Zylinderform und einer Sensor-Wirkfläche zu verwenden. Der Messkanal gemäß EP 0 639 776 A1 kann mit einfach zu fertigenden Bohrungen gefertigt sein, die sich in Radialrichtung in den Messkanal hinein, auf den Kanalmittelpunkt zu erstrecken. Die Sensorkomponenten sind axial in die Bohrungen eingesetzt und ragen in den Kanal hinein, wie beispielsweise in Figur 4a zu erkennen. Das hineinragende, die Position bzw. Eindringtiefe der jeweiligen Sensorkomponente, und die Drehung der Wirkfläche relativ zu einer Sensor-Längsachse, also die Orientierung der Sensorkomponente, wird bei der Montage aufwendig manuell eingestellt, sodass die Sensorkomponenten relativ zu einander korrekt ausgerichtet sind. Allerdings entstehen Messungenauigkeiten durch die in den Kanal hineinragenden Sensorkomponenten.

Zuverlässige Strömungsmessungen lassen sich auch dann schwierig erhalten, wenn der Strömungskanal, in dem die Messung durchgeführt werden sollen, gekrümmt ist beispielsweise kann ein Messkanal einen Eingangsbereich eines Stellventils bilden. Wie in der Patentanmeldung EP 3 748 308 A1 mit dem amtlichen Aktenzeichen EP 19 179 100.3 mit Anmeldetag 21. Januar 2019, hat es sich für derartige Kanalgeometrien mit Änderung der Strömungsrichtung durch eine Kanalkrümmung und/oder durch eine Änderung des Kanalquerschnitts als zweckmäßig erwiesen, in Umfangsrichtung entgegengesetzt wirkende Sensorscharen einzusetzen. Die Sensorscharen können eine gemeinsame passive Sensorkomponente in Form eines Reflektors verwenden. Um bei den komplizierten Kanalgeometrie und den daraus folgenden schwierigen Strömungsbedingungen gute Messergebnisse zu erhalten, werden die Gehäuse der Messrohre bzw. der Stellventil üblicherweise mit sehr präzisen Toleranzanforderungen gefertigt. So können etwa Stellventile derart genau gefertigt sein, dass ein Wandabschnitt als passive Reflektor-Sensorkomponente wirkt. Allerdings ist der Aufwand für die konventionelle Herstellung und Montage außerordentlich hoch. Üblicherweise werden eine oder mehrere Referenzflächen relativ zu einander hochpräzise gefertigt. Ausgehend von üblicherweise zwei oder drei planen und zu einander raumsenkrechten Referenzflächen kann eine definierte Raumgeometrie bestimmt werden. Anhand der Raumgeometrie werden Aufnahmen für die aktiven und/oder passiven Sensorelemente eingebracht, oder Kanalabschnitte nach bearbeitet. Die sehr hohen Kosten eines solchen Herstellungsverfahrens haben bislang verhindert, dass sich in der Prozesstechnik präzise Messungen von Prozessfluidparametern insbesondere in komplexen Strömungsgeometrien etablieren konnten.

US 8,490,498 B2 beschreibt einen Messkanal und ein Verfahren zum Erfassen und Überwachen einer Strömung durch den Messkanal mithilfe von Ultraschall. US 2016 0 116 316 A1, EP 2 278 280 A1, WO 2018 132 870 A1 und WO 2016 025 919 A1 beschreiben weitere Durchflussmessgeräte.

Es ist eine Aufgabe der Erfindung die Nachteile des Stands der Technik zu überwinden, insbesondere einen Messkanal bzw. ein Stellventil und ein Herstellungsverfahren für eine entsprechende Vorrichtung bereitzustellen, welche insbesondere bei komplexen Kanalgeometrien hochpräzise Messungen von Prozessfluidparametern bei verhältnismäßig geringem Kostenaufwand ermöglicht. Diese Aufgabe lösen die Gegenstände der unabhängigen Ansprüche.

Demnach ist ein Verfahren zum räumlichen Anordnen wenigstens einer Sensorkomponente in einem Messkanal vorgesehen, das die folgenden Schritte a) bis e) umfasst:
a) Bereitstellen einer vorbestimmten Soll-Geometrie des Messkanals. Eine Soll-Geometrie des Messkanals kann beispielsweise als geometrische Messwerte eines Referenz-Messkanal bereitgestellt sein.
   Eine Soll-Geometrie des Messkanals kann bereitgestellt sein als dreidimensionale technische Zeichnung. Beispielsweise kann eine Soll-Geometrie des Messkanals als Vektordarstellung und/oder CAD-(Computer aided design) Darstellung bereitgestellt sein, etwa einem konventionellen Dateiformat wie dwg oder stp. Das Bereitstellen kann das Auslesen von Daten von einem flüchtigen oder nicht-flüchtigen Speichermedium umfassen, beispielsweise einer CD-ROM, DVD, Blu-Ray-Disc, Festplatte oder dergleichen. Das Bereitstellen kann die Übertragung von Daten über ein Netzwerk, wie ein Bus-Netzwerk, ein Wireless-Netzwerk, das Internet, ein lokales Netzwerk oder dergleichen umfassen. Im Allgemeinen soll die Soll-Geometrie des Messkanals als theoretisches Modell bereitgestellt werden. Die Soll-Geometrie des Messkanals kann Daten bezogen auf die Form und/oder den Verlaufs der Innenseite des Messkanals oder der Kanalwand enthalten. Die Soll-Geometrie des Messkanals oder der Kanalwand kann Daten bezüglich einer Soll-Ausdehnung und/oder Soll-Form des Körpers des Messkanals oder der Kanalwand umfassen, beispielsweise betreffend die Kanal-Außenseite und/oder die Stärke der Wandung, die die Kanalinnenseite bildet.
b) Bereitstellen einer der Soll-Geometrie des Messkanals zugeordneten Sensorkomponenten-Soll-Anordnung, wobei die Sensorkomponenten-Soll-Anordnung räumlich bestimmte Positionsparameter und Orientierungsparameter umfasst.
   Das Bereitstellen der Soll-Geometrie und/oder der Sensorkomponenten-Soll-Anordnung kann die Übertragung von Daten umfassen. Eine Sensorkomponenten-Soll-Anordnung kann bereitgestellt sein als dreidimensionale technische Zeichnung. Beispielsweise kann eine Sensorkomponenten-Soll-Anordnung als Vektordarstellung und/oder CAD-(Computer aided design) Darstellung bereitgestellt sein, etwa einem konventionellen Dateiformat wie dwg oder stp. Das Bereitstellen kann das Auslesen von Daten von einem flüchtigen oder nicht-flüchtigen Speichermedium umfassen, beispielsweise einer CD-ROM, DVD, Blu-Ray-Disc, Festplatte oder dergleichen. Das Bereitstellen kann die Übertragung von Daten über ein Netzwerk, wie ein Bus-Netzwerk, ein Wireless-Netzwerk, das Internet, ein lokales Netzwerk oder dergleichen umfassen. Im Allgemeinen soll die Sensorkomponenten-Soll-Anordnung als theoretisches Modell bereitgestellt werden. Ein Positionsparameter kann ein Parameter sein, welcher eine Stelle in einem 2- oder 3-dimensionalen Koordinatensystem, beispielsweise dem kartesischen Koordinatensystem definiert, die einer Position in einem Raum zugeordnet ist. Ein Orientierungsparameter kann einen Drehwinkel relativ zu einem Bezugspunkt oder einer Rotation-Achsen insbesondere in Relation zu einem 2- oder 3-dimensionalen vorzugsweise räumlichen Koordinatensystem umfassen. Ein Orientierungsparameter definiert eine räumliche Orientierung in einem Raum. Eine Soll-Anordnung umfassend räumlich bestimmte Positionsparameter und umfassend räumlich bestimmte Orientierungsparameter kann sowohl eine vorbestimmte Stelle im Raum definieren, an der eine Sensorkomponente angeordnet sein soll, wie auch eine vorbestimmte Ausrichtung der Sensor-Komponente im Raum. Positionsparameter und/oder Orientierungsparameter, welche der Soll-Geometrie des Messkanals zugeordnet sind, definieren eine Position bzw. Orientierung in Bezug auf die Soll-Geometrie des Messkanals. Eine definierte Sensorkomponenten-Soll-Anordnung, die der Soll-Geometrie des Messkanals zugeordnet ist, definiert also die räumliche Position und die räumliche Orientierung einer Sensorkomponente relativ zu der Soll-Geometrie des Messkanals.
c) Zumindest stellenweise erfassen einer Ist-Geometrie des Messkanals.
   Die Ist-Geometrie des Messkanals kann stellenweise an einem Punkt des Messkanals erfasst werden. Die Ist-Geometrie des Messkanals kann stellenweise an mehreren Punkten des Messkanals erfasst werden. Die Ist-Geometrie des Messkanals kann abschnittsweise in einem Bereich, beispielsweise einem kreisförmigen Bereich oder einem Zylindermantelflächenbereich der Kanalinnenseite des Messkanals erfasst werden. Eine abschnittsweises erfassen der Ist-Geometrie des Messkanals kann erfolgen, indem mehrere Stellen des Messkanals in einem geringen Abstand, insbesondere von wenigen Mikrometern oder wenigen Millimetern relativ zu einander erfasst werden, und eine abschnittsweise Ist-Geometrie des Messkanals anhand der mehrfachen stellenweisen Erfassung bestimmt wird. Eine abschnittsweise Erfassung der Ist-Geometrie des Messkanals kann anhand einer flächigen Abtastung erfolgen. Das Erfassen der Ist-Geometrie des Messkanals kann beispielsweise taktil mittels Mess-Fühler, d. h. mechanischer Tastelemente, erfolgen. Das Erfassen der Ist-Geometrie des Messkanals kann beispielsweise optisch mittels eines optischen Scan-Sensors erfolgen. Das Erfassen der Ist-Geometrie des Messkanals kann beispielsweise akustisch, vorzugsweise durch eine Ultraschall-Messung, des Messkanals erfolgen.
d) Prüfung, ob wenigstens ein Positionsparameter oder Orientierungsparameter der Sensorkomponenten-Soll-Anordnung bezüglich der Ist-Geometrie außerhalb eines zulässigen Wertebereichs liegt, wobei, falls anhand der Prüfung wenigstens ein Positionsparameter oder Orientierungsparameter der Soll-Anordnung relativ zu der Ist-Geometrie außerhalb eines zulässigen Wertebereichs liegt, dieser Position- oder Orientierungsparameter der Sensorkomponenten-Soll-Anordnung unter Einhaltung des zulässigen Wertebereichs neu bestimmt wird und anschließend Schritt d) wiederholt wird.
   Ein zulässiger Wertebereich kann beispielsweise ein zulässiger Positions-Wertebereich sein, der insbesondere definiert ist als ein zulässiger Maximalabstand in Bezug auf eine Referenzposition. Ein zulässiger Wertebereich kann beispielsweise ein zulässiger Orientierungs-Wertebereich sein, der insbesondere definiert ist als eine zulässige maximale Winkelabweichung bezüglich eines Referenzvektors. Ein zulässiger Wertebereich kann vorbestimmt sein. Ein zulässiger Wertebereich kann in Relation zu der Ist-Geometrie des Messkanals bestimmt sein. Es sei klar, dass die Ist-Geometrie des Messkanals oftmals zumindest stellenweise oder abschnittsweise abweichen kann von der Soll-Geometrie des Messkanals. Beispielsweise kann der Messkanal als Gussteil gefertigt sein, wobei die Ist-Geometrie des Messkanals fertigungsbedingte Abweichungen von der Soll-Geometrie des Messkanals aufweisen kann. Die Ist-Geometrie des Messkanals kann von der Soll-Geometrie des Messkanals beispielsweise in Größe, Form und/oder Oberflächenbeschaffenheit, abweichen. Beispielsweise kann die Ist-Geometrie des Messkanals einen geringeren Kanalquerschnitt, eine abschnittsweise andere Kanalform, eine abschnittsweise andere Kanalkrümmung und/oder eine abschnittsweise andere Kanal-Querschnittsform im Vergleich zu der vorbestimmten, idealen Soll-Geometrie des Messkanal aufweisen. Die Sensorkomponenten-Soll-Anordnung kann durch eine insbesondere vorbestimmte Korrelation der Ist-Geometrie zu der Soll-Geometrie auf die Ist-Geometrie bezogen werden. Derartige Korrelationen sind dem Fachmann allgemein bekannt. Eine Korrelation beispielsweise in US 2008/0188986 A1 beschrieben. Eine Neubestimmung wenigstens eines Position- und/oder Orientierungsparameters der Soll-Anordnung innerhalb des zulässigen Wertebereichs kann erfolgen, indem eine Differenz zwischen einem Positionsparameter der Soll-anordnung und dem zulässigen Wertebereich bezüglich der Ist-Geometrie bestimmt wird. Beim Vorliegen einer Differenz, beispielsweise einer Weg-Differenz und/oder einer Winkel-Differenz, wird der von dem zulässigen Wertebereichs abweichende Parameter um die bestimmte Weg-Differenz modifiziert bzw. der von dem zulässigen Wertebereich abweichende Orientierungsparameter um die Winkel-Differenz modifiziert wird. Schritt d) kann mehrfach wiederholt werden, falls mehrere Position- und/oder Orientierungsparameter relativ zu der Ist-Geometrie außerhalb des zulässigen Wertebereichs liegen.
e) Anordnen der Sensorkomponente in dem Messkanal entsprechend der aktuellsten Sensorkomponente-Soll-Anordnung.

Es sei klar, dass Schritt e) im Anschluss an Schritt d) durchgeführt wird. Die aktuellste Sensorkomponenten-Soll-Anordnung entspricht einer Sensorkomponenten-Soll-Anordnung, welche in Bezug auf die Ist-Geometrie innerhalb des zulässigen Wertebereichs liegt. Das Verfahren verzichtet insbesondere darauf, dass an dem Messkanal, insbesondere dem Gusskörper, Referenzpunkte angebracht, insbesondere gefertigt, befestigt und/oder angeordnet, werden. Gemäß einer Ausführung kann bei dem Verfahren vorgesehen, sein, dass an dem Messkanal eine Reflexionsebene bereitgestellt wird, wobei die Kanalinnenseite des Messkanals mit Ausnahme einer Reflexionsebene als unbearbeiteter Gusskörper und/oder der Messkanal ggf. mit Ausnahme einer Reflexionsebene frei von Referenzflächen bereitgestellt wird.

Mit dem erfindungsgemäßen Verfahren ist es möglich, in einem verhältnismäßig ungenau gefertigten Messkanal eine Sensorkomponente hochpräzise anzuordnen, d. h. räumlich zu positionieren und räumlich zu orientieren, um eine hohe Messgenauigkeit von Prozessfluidparametern zu gewährleisten. Beispielsweise kann ein Messkanal mit Toleranzen im Millimeter-Bereich gefertigt werden und dennoch Sensorkomponenten-Anordnungs-Toleranzen im Mikrometer-Bereich gewährleistet werden. Das Anordnen der Sensorkomponente kann das erzeugen einer Sensorkomponenten-Aufnahme in den Mersskanal auf Basis der Ist-Geometrie des Messkanals und/oder der Sensorkomponenten-Soll-Anordnung umfassen. Beispielsweise kann eine Erodierung, Bohrung und/oder Fräsung zum Erzeugen einer Aufnahme für die Sensorkomponenten anhand der Ist-Geometrie und der Sensorkomponenten-Soll-Anordnung, welche innerhalb des zulässigen Wertebereichs liegt, verwendet werden, um anschließend die Sensorkomponente entsprechend ihrer Sensorkomponenten-Soll-Anordnung in der Aufnahme zu montieren.

Gemäß einer bevorzugten Ausführung eines erfindungsgemäßen Verfahrens wird der Messkanal und/oder das Stellventilgehäuse in einem Gussverfahren hergestellt.

Gemäß einem weiteren Aspekt der Erfindung, welcher eine Weiterbildung des oben genannten Verfahrens sein kann, ist ein Verfahren zum räumlichen anordnen wenigstens einer Sensorschar umfassend wenigstens zwei Sensorkomponenten in einem Messkanal vorgesehen. Das Verfahren verzichtet insbesondere darauf, dass an dem Messkanal, insbesondere dem Gusskörper, Referenzpunkte angebracht, insbesondere gefertigt, befestigt und/oder angeordnet, werden. Eine Sensorschar ist eine Gruppe mehrerer zusammenwirkender aktiver und/oder passive Sensorkomponenten. Eine aktive Sensorkomponente kann ein Sensorsignale zum Bestimmen eines Prozessfluidparameters senden und/oder empfangen. Eine aktive Sensorkomponente kann insofern als Sensor-Sendekomponente oder Sensor-Empfängerkomponente bezeichnet sein. Eine aktive Sensorkomponente, die Sensorsignale empfangen und senden kann, kann als Sensor-Transceiver-Komponente bezeichnet sein. Eine passive Sensorkomponente kann ein Sensorsignale zum Erfassen eines Prozessfluidparameters umlenken oder ablenken, insbesondere reflektieren, fokussieren oder dergleichen. Eine passive Sensorkomponente kann beispielsweise eine Sensorsignal-Linse oder ein Sensorsignale-Reflektor sein. Eine passive Reflektor-Sensorkomponente kann in Form eines Wandabschnitts der Kanalinnenseite des Messkanals realisiert sein (Spiegelfläche oder Reflexionsebene). Eine Spiegelfläche kann gefräst und/oder poliert sein. Eine Sensorschar, die zwei Sensorkomponente umfasst, beispielsweise eine aktive und eine passive Sensorkomponente oder zwei aktive Sensorkomponenten, kann als Sensorpaar bezeichnet sein. Eine Sensorschar kann drei, vier oder mehr Sensorkomponenten umfassen. Eine Sensorschar kann vorzugsweise aus drei, vier oder fünf Sensorkomponenten bestehen. Eine Sensorschar umfasst wenigstens eine aktive Sensorkomponente und wenigstens eine weitere, aktive oder passive Sensorkomponente. Eine Sensorschar kann zwei oder mehr aktive Sensorkomponenten umfassen. Eine Sensorschar kann wenigstens eine aktive Sensorkomponente und mehrere passive Sensorkomponenten umfassen. Gemäß einer bevorzugten Ausführung umfasst eine Sensorschar zwei aktive Sensorkomponenten und zwei passive Sensorkomponenten, wobei eine der passiven Sensorkomponenten eine Reflexionsebene ist.

Das Verfahren zum räumlichen anordnen wenigstens einer Sensorschar umfasst die folgenden Schritte a) bis d).
a) Bereitstellen einer vorbestimmten Soll-Geometrie des Messkanals.
b) Bereitstellen einer der Soll-Geometrie des Messkanals zugeordneten Sensorschar-Soll-Anordnung, wobei die Sensorschar-Soll-Anordnung bezüglich der mehreren aktiven und/oder passiven Sensorkomponenten räumlich bestimmte Positionsparameter und Orientierungsparameter umfasst.
   Vorzugsweise können für wenigstens zwei Sensorkomponenten der Sensorscharen jeweils der ersten Sensorkomponente zugeordnete räumlich bestimmte Positionsparameter und räumlich bestimmte Orientierungsparameter; sowie der zweiten Sensorkomponente zugeordnete räumlich bestimmte Positionsparameter und räumlich bestimmte Orientierungsparameter bereitgestellt werden. Für eine Sensorschar umfassend drei oder mehr Sensorkomponenten können den wenigstens drei Sensorkomponenten ihnen jeweils räumlich bestimmte Positionsparameter und Orientierungsparameter bereitgestellt werden. Für eine Sensorschar umfassend zwei oder mehr Sensorkomponenten kann für jede einzelne der zwei oder mehreren Sensorkomponenten die ihr jeweils zugeordneten vorbestimmten Positionsparameter und Orientierungsparameter bereitgestellt werden.
c) Zumindest stellenweise erfassen einer Ist-Geometrie des Messkanals.
   Die Ist-Geometrie des Messkanals kann an mehreren Stellen oder mehreren Abschnitten erfasst werden. Die Ist-Geometrie des Messkanals kann entlang eines Abschnittes oder mehrerer Abschnitte erfasst werden. Die Ist-Geometrie des Messkanals kann entlang der gesamten räumlichen Ausdehnung des Messkanals bestimmt werden. Die Ist-Geometrie des Messkanals kann für die gesamte Kanalinnenseite des Messkanals erfasst werden.
d) Prüfung, ob wenigstens ein Positionsparameter oder wenigstens ein Orientierungsparameter der Sensorschar-Soll-Anordnung, d. h. insbesondere ein Parameter einer Sensorkomponenten-Soll-Anordnung einer der Sensorkomponenten, bezüglich der Ist-Geometrie des Messkanals außerhalb eines zulässigen Wertebereichs liegt, wobei, falls anhand der Prüfung des wenigstens einen Positionsparameters oder des wenigstens einen Orientierungsparameters der Sensorschar-Soll-Anordnung der Parameter relativ zu der Ist-Geometrie außerhalb eines zulässigen Wertebereichs liegt, dieser Position- oder Orientierungsparameter der Sensorschar-Soll-Anordnung unter Einhaltung des zulässigen Wertebereichs neu bestimmt wird; und wobei anhand wenigstens eines vorbestimmten Anordnungskriteriums wenigstens ein weiterer Position- und/oder Orientierungsparameter der Sensorschar-Soll-Anordnung neu bestimmt wird und anschließend Schritt d) wiederholt wird.

Ein Anordnungskriterium kann beispielsweise eine vorbestimmte relative Anordnung von wenigstens zwei oder mehr, beispielsweise genau zwei, genau drei oder genau vier Sensorkomponenten relativ zu einer Sensorkomponente oder relativ zu einander sein. Ein Anordnungskriterium kann beispielsweise ein berechneter Sensorsignal-Strahlengang ausgehend von einer aktiven Sensorkomponente sein. Beispielsweise kann ein Sensorsignal-Strahlengang oder Sensorsignalpfad anhand der Fokussierung, Ablenkung, Umlenkung, insbesondere Reflexion, durch eine vorbestimmte passive Sensorkomponenten berechnet werden und als Anordnungskriterium dafür dienen, dass sämtliche Sensorkomponenten entsprechend eines vorbestimmten Sensorsignalpfades Innerhalb eines zulässigen Wertebereichs (d.h. physikalisch korrekt) angeordnet, also positioniert und orientiert werden. Beispielsweise kann ein Anordnungskriterium auf eine aktive und auf eine passive Sensorkomponente bezogen sein und einen Sensorsignal-Strahlengang betreffen, der von der aktiven Sensorkomponente ausgeht und durch die passive Sensorkomponente modifiziert wird. Ein Anordnungskriterium kann beispielsweise darauf bezogen sein, dass ein Sensorsignal-Strahlengang von einer Wirkfläche einer der aktiven oder passiven Sensorkomponenten ausgehend auf oder nahe, innerhalb einer zulässigen Toleranz, den Mittelpunkt der weiteren Sensorkomponente trifft. Ein Anordnungskriterium kann definiert sein anhand einer Reflexionsregel, beispielsweise darauf basierend, dass für eine passive Reflektor-Sensorkomponenten der Sensorsignalpfad-Eingangswinkel relativ zu einer Wirkflächennormalen der passiven Reflektor-Sensorkomponente gleich dem Ausgangswinkel bezogen auf die Wirkflächennormale sein soll. Gemäß einem Anordnungskriterium sind genau zwei Sensorkomponenten mit fluchtenden Wirkflächennormalen vorgesehen. Die Prüfung gemäß Schritt d) kann ein Anordnungskriterien oder mehrere Anordnungskriterien berücksichtigen. Schritt d) kann wiederholt werden, bis die Positionsparameter und die Orientierungsparameter von wenigstens einem, wenigstens zwei, wenigstens drei oder mehr oder sämtlichen Sensorkomponenten innerhalb des jeweils zulässigen Wertebereichs liegen und dem wenigstens einen oder den mehreren Anordnungskriterien entsprechen.

Gemäß einer Ausführung kann ein primäres Anordnungskriterium definiert sein als eine vorbestimmte Orientierung einer aktiven Sensorkomponente, insbesondere genau einer aktiven Sensorkomponente je Sensorpaar oder Sensorschar. Insbesondere kann das primäre Anordnungskriterium definiert sein als eine fixe Orientierung einer aktiven Sensorkomponente als Vektor im Raum. Vorzugsweise kann das Sekundäre Anordnungskriterium derart definiert sein, dass der Positionsparameter der aktiven Sensorkomponente zumindest teilweise, beispielsweise ausschließlich in Richtung der bestimmten Orientierung, unbestimmt ist. Das primäre Anordnungskriterium kann einen Sensorsignal-Strahlengang zumindest abschnittsweise zwingend definieren.

Alternativ oder zusätzlich kann ein sekundäres Anordnungskriterium definiert sein anhand eines vorbestimmten fixen Anordnungsparameters, insbesondere eines Positionsparameters und eines Orientierungsparameters, einer passiven Sensorkomponenten, insbesondere einer Reflexionsebene, wobei das Anordnungskriterium definiert sein kann als eine Referenzebene im Raum. Das sekundäre Anordnungskriterium kann als Grundlage für die Bestimmung von Strahlengangs-Eingangswinkel und Strahlengangs-Ausgangswinkel relativ zu der durch die einer Wirkfläche entsprechende Referenzebene und deren Referenzebenen-Wirkflächen-Normalen dienen, insbesondere mithilfe Reflexionsregel.

Es sei klar, dass der zulässige Wertebereich verschiedener Sensorkomponenten unterschiedlich definiert sein kann. Beispielsweise kann der ersten Sensorkomponente ein erster zulässiger Wertebereich zugeordnet sein und der zweiten Sensorkomponente ein zweiter zulässiger Wertebereich, usw. Der erste zulässige Wertebereich einer Sensorkomponente kann zulässige Positions- und/oder Orientierungsparameter der jeweiligen Sensorkomponenten in Relation zu der Ist-Geometrie des Messkanals definiert sein. Ein Anordnungskriterium kann auf wenigstens zwei Sensorkomponenten einer Sensorschar oder mehr Sensorkomponenten einer Sensorschar bezogen sein.

e) Anordnen der Sensorkomponenten der Sensorschar in dem Messkanal entsprechend der aktuellsten Sensorschar-Soll-Anordnung. Eine Sensorschar-Soll-Anordnung ist insbesondere definiert durch mehrere Sensorkomponenten-Soll-Anordnungen, insbesondere wenigstens zwei, drei oder wenigstens vier Sensorkomponenten-Soll-Anordnungen, vorzugsweise definiert durch die Sensorkomponenten-Soll-Anordnungen sämtlicher Sensorkomponenten der Sensorschar.

Eine Ausführung des Verfahrens umfasst eine Bereitstellung eines insbesondere gekrümmten Messkanals und ein ortsfestes Halten des Messkanals, wobei insbesondere der Messkanal zumindest während Schritt c), d) und/oder e), insbesondere während der Schritte c) bis e), kontinuierlich ortsfest gehalten wird. Durch das Bereitstellen und ortsfeste Halten des Messkanals während Schritt c) (Erfassen der Ist-Geometrie des Messkanals) und/oder während Schritt d) (Prüfung wenigstens einer Sensorkomponenten-Soll-Anordnung bezüglich der Ist-Geometrie und gegebenenfalls Anpassungen der Sensorkomponenten-Soll-Anordnung(en) bezüglich der Ist-Geometrie anhand eines zulässigen Wertebereichs und/oder gegebenenfalls ein eines vorbestimmten Anordnungskriteriums zum erhalten aktualisierter Sensorkomponenten-Soll-Anordnung(en) und/oder während Schritt e) (Anordnen der Sensorkomponente(en) entsprechend der aktuellsten Sensorkomponenten-Soll-Anordnung) konnten überraschenderweise besonders genaue Positionierung von Sensorkomponenten bzw. Sensorscharen umfassend mehrere Sensorkomponenten nahezu unabhängig von den Herstellungstoleranzen eines Messkanals erreicht werden. Insbesondere kann das Verfahren insgesamt dadurch beschleunigt werden, dass durch eine präzise ortsfeste Halterung des Messkanals der erforderliche Aufwand verringert wird. Wenn der Messkanal insbesondere kontinuierlich ortsfest gehalten ist, kann eine präzise Bestimmung der Ist-Geometrie des Messkanals anhand von mehreren Erfassungsschritten präzisiert werden, welche zeitlich voneinander getrennt erfolgen, ohne dass für die zeitlich getrennten Erfassungsschritte erneut redundante Messpunkte erfassen müssen. Beispielsweise kann der Messkanal in einem Mess-und-Herstellungs-Werkzeug insbesondere kontinuierlich ortsfest gehalten werden, welches sowohl mit Messwerkzeugen ein zum Erfassen der Ist-Geometrie des Messkanals gemäß Schritt c) ausgestattet ist, als auch mit Anordnungswerkzeugen zur Anordnung der Sensorkomponente(en) in dem Messkanal, sowie gegebenenfalls mit Bohr- und Fräswerkzeugen zur Herstellung von Aufnahmen für die Sensorkomponente(en) die Herstellung wenigstens einer Aufnahme (en) in demselben Werkzeug erfolgen.

Gemäß einer Ausführung des Verfahrens kann Schritt c) umfassen, dass die Ist-Geometrie des Messkanals optisch und/oder mechanisch abgetastet wird. Beispielsweise kann Schritt c) das Abtasten der Ist-Geometrie des Messkanals mit einem oder mehreren mechanischen Tastelemente umfassen.

Gemäß einer Weiterbildung des Verfahrens kann Schritt c) umfassen, dass die Positions- und/oder Orientierungsparameter einer als Abschnitt der Kanalinnenseite gebildeten Spiegelfläche oder Reflexionsebene erfasst werden, wobei die Reflexionsebene als passive Sensorkomponente wirkt. Die Positions- und/oder Orientierungsparameter einer Reflexionsebene können für die Bestimmung wenigstens eines Positions- und/oder Orientierungsparameters wenigstens einer passiven oder aktiven Sensorkomponenten als sekundäres Anordnungskriterium berücksichtigt werden.

Gemäß einer Ausführung des Verfahrens kann Schritt e) umfassend, dass wenigstens eine Aufnahme für die wenigstens eine Sensorkomponente oder die mehreren Sensorkomponenten, vorzugsweise genau eine Aufnahme für genau eine Sensorkomponente oder eine bestimmte Anzahl von Aufnahmen für dieselbe bestimmte Anzahl mehrerer Sensorkomponenten, insbesondere durch Erodieren, Bohren und/oder Fräsen erzeugt werden, wobei insbesondere die Aufnahme mit einem Axialanschlag für die wenigstens eine Sensorkomponente gebildet wird.

Gemäß einer Ausführung eines Verfahrens kann Schritt d) umfassen, dass der Positionsparameter einer ersten Sensorkomponente anhand einer translatorischen Verschiebung in Axialrichtung der ersten Sensorkomponente neu bestimmt wird und/oder dass der Orientierungsparameter der ersten Sensorkomponente anhand einer rotatorischen Verschwenkung der ersten Sensorkomponente relativ zu dem bzw. um den Positionsparameter der Sensorkomponente neu bestimmt wird.

Gemäß einer Ausführung des Verfahrens kann Schritt d) umfassen, dass ein erster Positionsparameter einer Sensorkomponente anhand einer translatorischen Verschiebung in Axialrichtung, insbesondere in Richtung der Wirkflächennormalen, der Sensorkomponente neu bestimmt wird. Insbesondere kann ein vorbestimmter axialer Soll-Abstand der Wirkfläche der Sensorkomponente relativ zu einer Kanalinnenseite des Messkanals berücksichtigt werden. Ein vorbestimmter axialer Soll-Abstand der Wirkfläche der Ventilkomponente relativ zu einer Kanalinnenseite des Messkanals kann als zulässiger Wertebereich definiert sein. Beispielsweise kann ein zulässiger Wertebereich eine Wertebereichbreite von ±0,4 mm oder kleiner betragen. Beispielsweise kann ein zulässiger Wertebereich eine Breite von ±0,2 mm oder weniger betragen. Beispielsweise kann ein zulässiger Wertebereich eine Breite von ±0,1 mm oder ±0,05 mm haben. Ein zulässiger Wertebereich kann beispielsweise definiert sein als ein Abstand von wenigstens 0,2 mm relativ zu der Kanalinnenseite des Messkanals, wenigstens 0,1 mm oder wenigstens 0,01 mm. Ein zulässiger Wertebereich kann definiert sein als ein Abstand von höchstens 2 mm, insbesondere höchstens 1 Millimeter, vorzugsweise höchstens 0,5 mm relativ zu der Kanalinnenseite des Messkanals. Beispielsweise kann ein zulässiger Wertebereich definiert sein als ein Abstand von 0,2 mm bis 1 mm relativ zu der Kanalinnenseite des Messkanals. Beispielsweise kann ein zulässiger Wertebereich als eine Wertebereichbreite kleiner als eine, insbesondere kleiner als die Hälfte oder ein Viertel einer, Gussherstellungstoleranz gemäß ISO 8062 definiert sein, insbesondere gemäß Gusstoleranzgrad CT 8, Gusstoleranzgrad CT 9, Gusstoleranzgrad CT 10, Gusstoleranzgrad CT 11, Gusstoleranzgrad CT 12 oder Gusstoleranzgrad CT 13.

Gemäß einer Weiterbildung des Verfahrens kann vorbestimmt sein, dass die erste Sensorkomponente eine passive Sensorkomponente ist. Vorzugsweise kann die weitere Sensorkomponente ein Reflektor sein, insbesondere ein Ultraschallreflektor. Gemäß einer Ausführung des Verfahrens kann die Neubestimmung des ersten Position- und/oder Orientierungsparameters der ersten Sensorkomponente anhand eines Strahlengangs-Anordnungskriteriums bestimmt werden, insbesondere anhand eines Strahlengangs von einem Mittelpunkt einer Wirkfläche einer weiteren Sensorkomponente zu einem Mittelpunkt der ersten Wirkfläche der ersten Sensorkomponente und/oder anhand eines vorbestimmten axialen Soll-Abstands einer der ersten Wirkfläche der ersten Sensorkomponente relativ zu einer Kanalinnenseite des Messkanals.

Gemäß einer Ausführung eines Verfahrens kann Schritt d) umfassen, dass der weitere Positionsparameter einer weiteren Sensorkomponente anhand einer translatorischen Verschiebung in Axialrichtung der weiteren Sensorkomponente neu bestimmt wird und/oder dass der weitere Orientierungsparameter anhand einer rotatorischen Verschwenkung der weiteren Sensorkomponente relativ zu dem bzw. um den Positionsparameter der weiteren Sensorkomponente neu bestimmt wird. Vorzugsweise kann ein Sender und/oder ein Empfänger, insbesondere ein Ultraschallsender, Ultraschallempfänger oder Ultraschalltransducer die weitere Sensorkomponente sein.

Die Neubestimmung des weiteren Position- und/oder Orientierungsparameters der weiteren Sensorkomponenten anhand eines vorbestimmten axialen Soll-Abstands der (weiteren) Wirkfläche der weiteren Sensorkomponente relativ zu einer (weiteren) Kanalinnenseite des Messkanals kann bestimmt werden wie oben beschrieben die Neubestimmung der ersten Positionsparameters der ersten Sensorkomponente zu der Kanalinnenseite.

Die Neubestimmung des weiteren Position- und/oder Orientierungsparameters der weiteren Sensorkomponente kann dahingehend bestimmt werden, dass durch eine translatorische Verschiebung der weiteren insbesondere passiven Sensorkomponente quer zu einer Wirkflächen-normalen der weiteren Sensorkomponenten der Strahlengangs von der aktiven Sensorkomponente zu der zweiten, passiven Sensorkomponenten auf den Mittelpunkt der Wirkflächen der zweiten Sensorkomponente trifft. Die Neubestimmung des Position- und/oder Orientierungsparameters der weiteren Sensorkomponente anhand des Strahlengangs kann dahingehend erfolgen, dass der Orientierungsparameter dahingehend neu bestimmt wird, dass ein Strahlengangs-Eingangswinkel ausgehend von der ersten Sensorkomponente relativ zu einer Wirkflächen-Normalen einem Strahlengangs-Ausgangswinkel relativ zur Wirkflächen normalen identisch entspricht und in derselben Strahlengangs-Ebene liegt, sodass der Sensorsignale-Strahl nach der Umlenkung durch die zweite Sensorkomponente eine dritte Sensorkomponente insbesondere mittig trifft. Die Neubestimmung des weiteren Position- und/oder Orientierungsparameters der weiteren Sensorkomponente kann eine oder mehrere der hier beschriebenen Neubestimmung Methode umfassen. Falls die Neubestimmung des weiteren Position- und/oder Orientierungsparameters anhand eines vorbestimmten zulässigen Wertebereichs und/oder eines oder mehrerer Anordnungskriterien mehrere Methoden umfasst, so können die Methode vorzugsweise nacheinander, bei mehreren Durchläufen des Verfahrensschritt d) erfolgen.

Gemäß einer Weiterbildung des Verfahrens kann eine weitere Sensorkomponente eine aktive Sensorkomponente sein.

Gemäß einer Ausführung des Verfahrens ist vorgesehen, dass keine Sensorkomponente, insbesondere keine der mehreren Sensorkomponenten, die Kanalinnenseite des Messkanals durchdringt. Gemäß einer bevorzugten Ausführung eines erfindungsgemäßen Verfahrens werden die wenigstens eine Sensorkomponente oder die mehreren Sensorkomponenten innerhalb einer Kanalwand des Messkanals angeordnet. Eine Anordnung einer Sensorkomponente innerhalb einer Kanalwand bedeutet, dass die gesamte Sensorkomponente oder zumindest die Wirkflächen der Sensorkomponente sich in einem Raumabschnitt vollständig befindet, welche durch den Körper oder die radiale Dicke der Kanalwand des Messkanals begrenzt ist. Indem die Sensorkomponente, insbesondere deren Wirkfläche, vollständig außerhalb der prozessfluidführenden Kanalinnenseite des Messkanals angeordnet wird, ist sichergestellt, dass die Sensorkomponente keinen störenden Einfluss auf das Prozessfluid nimmt und die Messgenauigkeit nicht durch eine Störung der Prozessfluidströmung beeinträchtigt. Alternativ oder zusätzlich kann eine passive Sensorkomponente als Abschnitt der Kanalinnenseite des Messkanals, insbesondere als Reflexionsebene, ausgebildet sein.

Gemäß einer Ausführung des Verfahrens kann vorgesehen sein, dass die Prüfung gemäß Schritt d) in einer ersten Prüfungsphase für bezogen auf wenigstens eine passive Sensorkomponente durchgeführt wird und danach in einer zweiten Prüfungsphase die Prüfung gemäß Schritt d) bezogen auf wenigstens eine aktive Sensorkomponente durchgeführt wird, wobei in der zweiten Prüfungsphase die Prüfung gemäß Schritt d) zuerst bezogen auf eine erste von wenigstens zwei aktiven Sensorkomponenten und danach bezogen auf eine zweite von wenigstens zwei aktiven Sensorkomponenten durchgeführt wird

Die Erfindung betrifft auch einen Messkanal für ein Prozessfluid einer prozesstechnischen Anlage, wie ein Kraftwerk, eine petrochemische Anlage, eine lebensmittelverarbeitende Anlage oder dergleichen, mit einer zylinderhülsenförmigen Kanalwand, umfassend wenigstens eine in der Kanalwand montierte aktive Sensorkomponente zum Bestimmen einer Messgröße des Prozessfluides, wie Strömungsgeschwindigkeit, Dichte, Massestrom oder dergleichen. Eine Messgröße des Prozessfluides wird im Sinne dieser Anmeldung auch als Prozessfluidparameter bezeichnet. Erfindungsgemäß gemäß ist die Kanalwand als Gusskörper gebildet und/oder weist Herstellungstoleranzen von ±1 mm oder mehr, insbesondere ±2 mm oder mehr auf. Bei einer Ausführung kann die Kanalwand als Gusskörper hergestellt sein und weist eine Oberflächengüte RZ 63 - 250 auf. Die Kanalwand kann als Gusskörper gebildet sein und Gussherstellungstoleranzen gemäß ISO 8062 aufweisen, insbesondere Gusstoleranzgrad CT 8, Gusstoleranzgrad CT 9, Gusstoleranzgrad CT 10, Gusstoleranzgrad CT 11, Gusstoleranzgrad CT 12 oder Gusstoleranzgrad CT 13. Die Fertigung von Stellventilgehäusen und/oder Messkanälen als Gusskörper ist besonders wirtschaftlich. Die wenigstens eine aktive Sensorkomponente ist an der Kanalwand mit einer Positionstoleranz von ±0,5 mm, insbesondere ±0,2 mm, oder weniger angeordnet. Alternativ ist die wenigstens eine aktive Sensorkomponente an der Kanalwand mit einer Positionstoleranz von weniger als die, insbesondere weniger als die Hälfte oder ein Viertel der, Gussherstellungstoleranz des Messkanals angeordnet. Weniger ist zu verstehen im Sinne einer kleineren oder schmaleren, d.h. genaueren Toleranz. Die Angabe kann insbesondere auf das Längenmaß der Gussherstellungstoleranz bezogen sein. Beispielsweise kann das Längenmaß einer Gussherstellungstoleranz für einen Messkanal mit Nennweite 50 mm bei einem Gusstoleranzgrad CT 9 2 mm betragen, sodass folglich die Sensorkomponente mit einer genaueren Toleranz <2mm, insbesondere <1mm (d.h.: < ±0,5 mm), bevorzugt <0,5 mm (d.h.: < ±0,25 mm) anzuordnen ist.

Der Nennweiten-Innendurchmesser des Messkanals kann wenigstens 5 cm, wenigstens 10 cm, wenigstens 30 cm oder mehr betragen. Die Gussherstellungstoleranz kann abhängig von dem Nennweiten-Innendurchmesser des Messkanals gewählt sein, sowie insbesondere anhand eines Gusstoleranzgrads, vorzugsweise anhand von Gusstoleranzgrad CT 9.

Insbesondere ist die aktive Sensorkomponente derart in der Kanalwand des Messkanals angeordnet, dass eine Stirnseite, vorzugsweise eine Wirkfläche, der aktiven Sensorkomponente in einem vorbestimmten Abstand von 0,0 mm bis 2,0 mm, insbesondere 0,2 mm bis 1,0 mm relativ zu der Innenseite des Messkanals angeordnet ist, wobei die Stirnseite, insbesondere die Wirkfläche, der aktiven Sensorkomponente nicht in den Innenraum des Prozessfluidkanals hineinragt.

Gemäß einer Ausführung eines erfindungsgemäßen Messkanälen umfasst der Messkanal wenigstens eine Sensorschar zusammenwirkender Sensorkomponenten, wobei die Sensorschar die wenigstens eine aktive Sensorkomponente und wenigstens eine weitere, aktive oder passive Sensorkomponenten umfasst. Die aktive Sensorkomponente weist eine aktive Wirkfläche auf. Die weitere Sensorkomponente weist eine weitere, aktive oder passive Wirkfläche auf. Die weitere Wirkfläche und die aktive Wirkfläche sind relativ zu einander mit einer Winkeltoleranz von ±1 Prozent oder weniger angeordnet. Insbesondere umfasst die wenigstens eine Sensorschar eine weitere aktive Sensorkomponente und wenigstens eine weitere passive Sensorkomponente, wobei alle weiteren Wirkflächen, die aktive Wirkflächen der weiteren aktiven Sensorkomponente und die passive Wirkflächen der weiteren passiven Sensorkomponente, relativ zu der aktiven Wirkflächen mit einer Winkeltoleranz von ±2° oder weniger, insbesondere ±1° oder weniger, relativ zu einander angeordnet sind. Insbesondere sind alle Sensorkomponenten der Sensorschar an der Kanalwand mit einer Positionstoleranz von ±0,5 mm oder weniger, insbesondere ±0,2 mm oder weniger angeordnet. Alternativ sind alle Sensorkomponenten der Sensorschar an der Kanalwand mit einer Positionstoleranz von weniger als, insbesondere weniger als die Hälfte oder ein Viertel der, Gussherstellungstoleranz des Messkanals angeordnet. Weniger ist zu verstehen im Sinne einer kleineren oder schmaleren, d.h. genaueren Toleranz. Die Angabe kann insbesondere auf das Längenmaß der Gussherstellungstoleranz bezogen sein.

Insbesondere ist die passive Sensorkomponente derart in der Kanalwand des Messkanals angeordnet, dass eine Stirnseite, vorzugsweise eine Wirkfläche, wie eine Reflektorfläche, der passiven Sensorkomponente in einem vorbestimmten Abstand von 0,0 mm bis 2,0 mm, insbesondere 0,1 mm bis 1,5mm, vorzugsweise 0,2 mm bis 1,0 mm, relativ zu der Innenseite des Messkanals angeordnet ist, wobei die Stirnseite, insbesondere die Wirkfläche, der passiven Sensorkomponente nicht in den Innenraum des Prozessfluidkanals hineinragt.

Gemäß einer Ausführung weist der Messkanal wenigstens eine zweite Sensorschar zusammenwirkender Sensorkomponenten auf, wobei die zweite Sensorschar wenigstens eine zweite aktive Sensorkomponente und wenigstens eine zweite weitere aktive oder passive Sensorkomponente umfasst. Die erste Sensorschar ist relativ zu der zweiten Sensorschar mit einer Positionstoleranz von ±0,5 mm oder weniger, insbesondere ±0,2 mm oder weniger, angeordnet. Alternativ ist die erste Sensorschar ist relativ zu der zweiten Sensorschar mit einer Positionstoleranz von weniger als, insbesondere weniger als die Hälfte oder ein Viertel der, Gussherstellungstoleranz des Messkanals angeordnet. Insbesondere ist eine passive Sensorkomponente der ersten Sensorschar identisch mit einer passiven Sensorkomponente der zweiten Sensorschar. Vorzugsweise umfassen die erste Sensorschar und die zweite Sensorschar wenigstens eine gemeinsame passive Sensorkomponente. Sofern die Sensorkomponente der ersten Sensorschar und der zweiten Sensorschar in dem Messkanal gemäß dem erfindungsgemäßen Verfahren angeordnet werden, kann die Anordnung dahingehend gestaltet werden, dass die Anordnung der gemeinsam genutzten passive Sensorkomponente vorbestimmt festgelegt wird und insbesondere bei späteren bzw. weiteren Durchführung von Schritt d) von einer Neubestimmung ausgeschlossen ist, nachdem festgestellt wurde, dass die Sensorkomponenten-Soll-Anordnung der gemeinsamen Sensorkomponente innerhalb eines zulässigen Wertebereichs bezüglich des Messkanals liegt. Sensorscharen mit einer gemeinsamen passiven Sensorkomponente können als einander überlappende Sensorscharen bezeichnet sein. Durch die Verwendung von einander überlappenden Sensorscharen lässt sich besonders effektiv erreichen, dass besonders genaue Prozessfluidparametern-Messergebnisse erzielt werden können, insbesondere bei Messungen der erster Sensorschar in Strömungsrichtung des Prozessfluides und Messung der zweiten Sensorschar entgegen der Strömungsrichtung des Prozessfluids.

Die Angabe der Positionstoleranz kann insbesondere auf das Längenmaß der Gussherstellungstoleranz bezogen sein. Beispielsweise kann das Längenmaß einer Gussherstellungstoleranz für einen Messkanal mit Nennweite 200 mm bei einem Gusstoleranzgrad CT 10 4 mm betragen, sodass folglich die Sensorscharen relativ zu einander mit einer genaueren Toleranz <4 mm, insbesondere <2 mm (d.h.: < ±1 mm), bevorzugt <1 mm (d.h.: < ±0,5 mm) anzuordnen sind.

Gemäß einer bevorzugten Ausführung eines Messkanals ist die aktive Sensorkomponente ein Sender und/oder ein Empfänger, insbesondere ein Ultraschallsender, Ultraschallempfänger oder Ultraschalltransducer.

Gemäß einer bevorzugten Ausführung ist die passive Sensorkomponente ein Reflektor, insbesondere ein Ultraschallreflektor.

Gemäß einer bevorzugten Ausführung ist die Sensorkomponente eine Ultraschallsensorkomponente.

Gemäß einer bevorzugten Ausführung definiert die Kanalwand des Messkanals eine dem Prozessfluid zugewandte Kanalinnenseite und umfasst eine vorzugsweise zylindrische Sensoraufnahme, die insbesondere die Kanalwand insbesondere radial durchdringt, wobei die Sensorkomponente in der Sensoraufnahme angeordnet ist. Die Sensorkomponente kann eine aktive oder passive Wirkflächen aufweisen. Die Wirkfläche ist bevorzugt vollständig außerhalb der Kanalinnenseite angeordnet. Insbesondere ist die Wirkfläche in Radialrichtung vollständig radial außerhalb der Kanalinnenseite angeordnet. In anderen Worten ist die Wirkfläche vollständig in dem das Vollmaterial der Kanalwand durchdringenden Bereich der Sensoraufnahme angeordnet. Gemäß einer bevorzugten Ausführung definiert die Kanalwand des Messkanals eine dem Prozessfluid zugewandte Kanalinnenseite und umfasst eine passive Sensorkomponente mit einer passiven Wirkfläche, die als Teil der Kanalinnenseite, insbesondere als Reflexionsebene, gebildet ist

Gemäß einer bevorzugten Ausführung ist ein erfindungsgemäßer Messkanal mit dem erfindungsgemäßen Verfahren hergestellt. Insbesondere kann das erfindungsgemäße Verfahren zur Herstellung eines erfindungsgemäßen Messkanals als durchgeführt werden. Vorzugsweise kann das erfindungsgemäße Verfahren durchgeführt werden, um einen erfindungsgemäßen Messkanal zu erzeugen.

Die Erfindung betrifft auch ein Stellventilgehäuse für ein Stellventil einer prozesstechnischen Anlage, wie ein Kraftwerk, eine petrochemische Anlage, eine lebensmittelverarbeitende Anlage oder dergleichen, umfassend einen Prozessfluideingang, einen Prozessfluidausgang und einen zwischen Prozessfluideingang und Prozessfluidausgang angeordneten verschließbaren Ventilsitz, wobei das Stellventilgehäuse zumindest abschnittsweise als Messkanal gebildet ist.

Gemäß einer bevorzugten Ausführung des Stellventilgehäuses ist der Messkanal am Prozessfluideingang und/oder am Prozessfluidausgang angeordnet.

Die Erfindung betrifft auch ein Stellventil zum Einstellen einer Prozessfluidströmung einer prozesstechnischen Anlage, wie ein Kraftwerk, eine petrochemische Anlage, eine lebensmittelverarbeitende Anlage oder dergleichen, umfassend ein Stellventilgehäuse, dass zumindest abschnittsweise als Messkanal gebildet ist, und ein bewegliches Ventilglied zum Schließen des Ventilsitzes.

Gemäß einer Ausführung umfasst das Stellventil einen pneumatischen, hydraulischen oder elektrischen Aktor zum betätigen des Ventilglieds und/oder eine Stell- und/oder Regelungselektronik zum Steuern des Aktors.

Vorzugsweise wirkt die Stell- und/oder Regelungselektronik auf den Aktor auf Basis von Prozessfluidparametern, die mit der wenigstens einen Sensorkomponente und/oder der wenigstens einen Sensorschar erfasst sind. Vorzugsweise ist die Steuerungs- und/oder Regelungselektronik signalübertragungsgemäß mit dem der wenigstens einen Sensorkomponente und/oder der wenigstens einen Sensorschar verbunden. Die Steuer- und/oder Regelungselektronik ist vorzugsweise dazu ausgestaltet, ein korrespondierendes Stellsignal an den Aktor zu veranlassen, dass zu Prozessfluidparametern korrespondiert, die mittels der Sensorkomponente und/oder der Sensorschar gemessen wurden.

Im Allgemeinen sollen bei einem Verfahren zum Anordnen einer Sensorkomponente oder einer Sensorschar auf der Basis eines theoretischen Modells (Messkanal-Soll-Geometrie und Sensorkomponenten- bzw. Sensorschar-Soll-Anordnung) markante Punkte im insbesondere gekrümmten Messkanal gemessen werden (Messkanal-Ist-Geometrie). Auf Basis der Messkanal-Ist-Geometrie wird dann die Sensorschar-Soll-Anordnung neu berechnet und in Bezug auf die Messkanal-Ist-Geometrie bestimmt. Neue Orientierung und Positionierung der Sensorkomponenten- bzw. Sensorschar-Anordnung beeinflussen einander wechselseitig. Dieser Vorgang wird wiederholt bis die Orientierung und Position der Sensorkomponenten- bzw. Sensorschar-Anordnung zu der Messkanal-Ist-Geometrie innerhalb einer vordefinierten Toleranz liegt. Das Verfahren verzichtet insbesondere darauf, dass an dem Messkanal, insbesondere dem Gusskörper, Referenzpunkte angebracht, insbesondere gefertigt, befestigt und/oder angeordnet, werden.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Figur 1: eine Soll-Geometrie eines erfindungsgemäßen Stellventils mit einem erfindungsgemäßen Messkanal und darin gemäß einer Soll-Anordnung angeordneten Sensorscharen;
- Figur 2: eine schematische Darstellung der Soll-Anordnungen einer ersten und einer zweiten Sensorschar;
- Figur 3: die Soll-Anordnung einer passiven Sensorkomponente in Relation zu einer Soll-Geometrie des Messkanals;
- Figur 4a: eine Soll-Geometrie der Sensorkomponente gemäß Figur 3 in Relation zu einer Ist-Geometrie des Messkanals;
- Figur 4b: eine neu bestimmte Soll-Anordnung der passiven Sensorkomponente gemäß Figur 3 in Relation zu der der Ist-Geometrie des Messkanals;
- Figur 5a: die Soll-Geometrie der Sensorkomponente gemäß Figur 3 entsprechend der Neuanordnung gemäß Figur 4b in Relation zu der Ist-Kanalgeometrie unter Berücksichtigung eines Anordnungskriteriums;
- Figur 5b und 5c: eine weitere Neuanordnung der Sensorkomponente gemäß der Figuren 3 unter Berücksichtigung von Anordnungskriterien;
- Figur 6: eine schematische Darstellung der Sensorschar mit der neu angeordneten Sensorkomponente gemäß Figure 3 und einer weiteren Sensorkomponente;
- Figur 7a: eine Sensorkomponente, die deren Soll-Anordnung relativ zu der Ist-Geometrie des Messkanals innerhalb eines zulässigen Wertebereichs liegt; und
- Figuren 7b und 7c: eine Sensorkomponente, die bezüglich der Ist-Geometrie des Messkanals außerhalb eines zulässigen Wertebereichs liegt.

Bei der folgenden Beschreibung bevorzugter Ausführungen der Erfindung werden zur Vereinfachung der Lesbarkeit für dieselben oder ähnliche Komponenten dieselben oder ähnliche Bezugszeichen verwendet.

Ein erfindungsgemäßer Messkanal hat im Allgemeinen das Bezugszeichen 1. Ein erfindungsgemäßes Stellventilgehäuse hat im Allgemeinen das Bezugszeichen 100. Der Index "I" steht im Allgemeinen für eine Ist-Geometrie und der Index "S" steht im Allgemeinen für eine Soll-Geometrie.

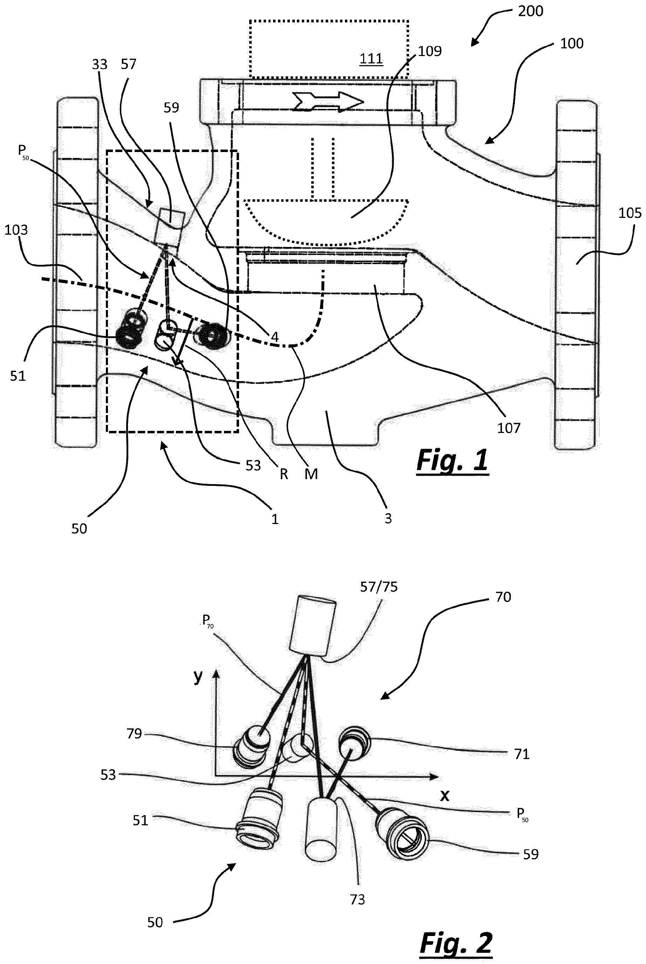

Figur 1 zeigt die Soll-Geometrie des Ventilgehäuses 100. Das Ventilgehäuse hat eine mit einem Pfeil angedeutete Strömungsrichtung, wobei in Strömungsrichtung hinter einander zunächst eine Prozessfluideingang 103, anschließend ein verschließbarer Ventilsitz 107 und dahinter ein Prozessfluidausgang 105 in dem Stellventilgehäuse 100 ausgebildet sind. Bei der in Figur 1 dargestellten Ausführung ist der Messkanal 1 an dem Prozessfluideingang 103 des Stellventilgehäuses 100 angeordnet. Ein bewegliches Ventilglied 109 zum Schließen des Ventilsitzes 107 und ein Aktor 111 zum Betätigen des Ventilglieds 109 sind gestrichelt angedeutet. Eine Steuerung- und/oder Regelungselektronik zum Einstellen des Aktors ist nicht näher dargestellt.

Das Ventilgehäuse 100 stellt für das Prozessfluid einen durchströmbaren Kanalquerschnitt bereit. Wie in Figur 1 schematisch angedeutet, kann der Kanalquerschnitt von dem Prozessfluideingang 103 zu dem Ventilsitz 107 seine Form, Querschnittsgröße, Querschnittsform, ob und Orientierung ändern. Ein Kanalquerschnitt, der sich zwischen Prozessfluideingang 103 und -Ausgang 105 bzw. verschließbarem Wirkquerschnitt 107 in mehrerlei Hinsicht verändert, kann als Kanalquerschnitts mit komplexer Geometrie bezeichnet werden.

Das Ventilgehäuse 100 und der damit integral ausgebildeter Messkanal 1 weist einer Kanalwand 3 auf. Die Dicke der Kanalwand 3 kann örtlich variieren, also in unterschiedlichen Stellen in Strömungsrichtung und/oder in Umfangsrichtung entlang des Kanalverlaufs unterschiedlich stark sein. Der Kanalverlauf kann relativ zu einer Mittelpunktlinie M definiert sein. Die Dicke der Kanalwand kann in Radialrichtung R relativ zu der Mittelpunktlinie M definiert sein. Die Kanalinnenseite 4 oder Kontur des prozessfluiddurchströmte Bereichs des Messkanals ein kann vorzugsweise eine kontinuierlich gerundete Gestalt aufweisen, wobei die Rundungen örtlich unterschiedlich sein können, anders gesagt ortsabhängig unterschiedliche Krümmungsradien aufweisen kann.

In der Figur 1 ist die Innenkontur 4 des Kanals 1 entsprechend einer idealen Soll-Geometrie dargestellt. Infolge von beispielsweise Gusstoleranzen kann die Ist-Geometrie der Ihnen Kontur des Messkanals 1 signifikant von der Soll-Geometrie abweichen. Hierauf wird im Folgenden näher eingegangen. Die Kanalwand kann als Gusskörper gebildet sein und Gussherstellungstoleranzen gemäß ISO 8062 (bevorzugt ISO 8062-3:2008-09) aufweisen, insbesondere Gusstoleranzgrad CT 9, Gusstoleranzgrad CT 10, Gusstoleranzgrad CT 11, Gusstoleranzgrad CT 12 oder Gusstoleranzgrad CT 13.

| Messkanal-Nennweite [mm] | Längenmaß [mm] Gusstoleranz nach EN ISO 8062-3 (2008-09) | | | | | |
|---|---|---|---|---|---|---|
| | Gusstoleranzgrad CT | | | | | |
| | 8 | 9 | 10 | 11 | 12 | 13 |
| 0-10 | 1 | 1,5 | 2 | 2,8 | 4,2 | - |
| >10-16 | 1,1 | 1,6 | 2,2 | 3 | 4,4 | - |
| >16-25 | 1,2 | 1,7 | 2,4 | 3,2 | 4,6 | 6 |
| >25-40 | 1,3 | 1,8 | 2,6 | 3,6 | 5 | 7 |
| >40-63 | 1,4 | 2 | 2,8 | 4 | 5,6 | 8 |
| >63-100 | 1,6 | 2,2 | 3,2 | 4,4 | 6 | 9 |
| >100-160 | 1,8 | 2,5 | 3,6 | 5 | 7 | 10 |
| >160-250 | 2 | 2,8 | 4 | 5,6 | 8 | 11 |
| >250-400 | 2,2 | 3,2 | 4,4 | 6,2 | 9 | 12 |
| >400-630 | 2,6 | 3,6 | 5 | 7 | 10 | 14 |
| >630-1000 | 2,8 | 4 | 6 | 8 | 11 | 16 |
| >1000-1600 | 3,2 | 4,6 | 7 | 9 | 13 | 18 |

Figur 1 zeigt auch eine Sensorschar 50, die vier Sensorkomponenten 51, 53, 57 und 59 umfasst. Die Sensorschar 50 umfasst eine erste aktive Sensorkomponente 51, die beispielsweise als Ultraschall-Sender gestaltet sein kann, und eine weitere erste aktive Sensorkomponente 59, die beispielsweise als Ultraschall-Empfänger ausgestellt sein kann. Die erste Sensorschar 50 umfasst zwei passive Sensorkomponenten 53 und 57, die beispielsweise als Ultraschall-Reflektoren ausgestaltet sein können.

In Figur 1 ist ein Sensor-Signalpfad P₅₀ der ersten Sensorschar 50 mit einer gestrichelten Linie dargestellt. Der Sensor-Signalpfad symbolisiert den Pfad, den ein Ultraschallsensor-Messsignal von der ersten aktiven Sensorkomponente 51 zu der weiteren aktiven Sensorkomponente 59 absolvierte, wobei der Signalpfad P₅₀ durch die reflektierenden passiven Sensor Komponenten 53 und 57 umgelenkt wird. Beispielsweise kann ein Sensor-Signalpfad P₅₀ beispielsweise gemäß der schematischen Darstellung in Figur 1 sich in einer Umfangsrichtung des Kanals 1 im Uhrzeigersinn verlaufen. Der Sensorsignalpfad P₅₀ kann von der ersten aktiven Sensorkomponente 51 zu der weiteren aktiven Sensorkomponente 59 zusätzlich oder alternativ in Richtung der Strömungsrichtung des Prozessfluides verlaufen.

Figur 2 zeigt eine schematische Darstellung von zwei Sensorscharen 50, 70, die in einem zur besseren Darstellung nicht näher gezeigten Messkanal angeordnet sein können. Das Sensorsignal P₅₀ der ersten Sensorschar 50 verläuft wie oben beschrieben.

Der Sensorsignalpfad P₇₀ der zweiten Sensorschar 70 kann in entgegengesetzter Richtung relativ zu dem Signalpfad P₅₀ der ersten Sensorschar 50 verlaufen. Beispielsweise kann der Sensorsignalpfad P₇₀ der zweiten Sensorschar 70 in Umfangsrichtung des Kanals entgegengesetzt zum Uhrzeigersinn verlaufen von dem aktiven Sensorelement 71 zu dem weiteren aktiven Sensorelemente 79 der zweiten Sensorschar 70. Dabei kann das Sensorsignal der zweiten Sensorschar 70 von zwei passiven Sensorkomponenten 75, 73 reflektiert werden. Der Sensorsignalpfad P₇₀ der zweiten Sensorschar 70 kann alternativ oder zusätzlich in entgegengesetzter Richtung zur Strömungsrichtung des Prozessfluides in dem nicht näher dargestellten Messkanal von der zweiten aktiven Sensorkomponente 71 zu der zweiten weiteren aktiven Sensorkomponente 79 der zweiten Sensorschar 70 verlaufen.

Es sei klar, dass die aktive Sensorkomponente 51, 59, 71, 79 einer Sensorschar paarweise als Sender und Empfänger gebildet sein können oder als Transceiver. Wie in Figur 2 ersichtlich, können die beiden Sensorscharen 50 und 70 eine gemeinsame passive Sensorkomponente aufweisen, die hier die Bezugszeichen 57 und 75 hat. Die erste Sensorschar 50 und die zweite Sensorschar 70 benutzen einen Sensorsignal-Reflektor 57/75 gemeinsam, sodass die Messergebnisse der beiden Sensorscharen besser miteinander korreliert und/oder verglichen werden können. Insbesondere kann der gemeinsame Sensorsignal-Reflektor als Reflexionsebene realisiert sein, die als ein Teil der Kanalinnenseite 4 des Messkanals 3 realisiert ist.

Figur 3 zeigt eine ideale Messkanals-Soll-Geometrie mit daran entsprechend einer Soll-Anordnung vorgesehenen Sensorkomponente, für die im Folgenden der Einfachheit halber das Bezugszeichen 6 verwendet wird. Es sei klar, dass die Sensorkomponente 6 exemplarisch für eine beliebige passive Sensorkomponente 53, 57, 73 oder 75 steht, wobei die im folgenden beschriebene Anpassungsschritte gleichermaßen Anwendung finden können, um eine Soll-Geometrie einer aktiven Sensorkomponente 51, 59, 71 oder 79 zu definieren.

Figur 3 zeigt den idealen Sollzustand, in dem die Anordnung der Sensorkomponente 6 im Hinblick auf die Soll-Kanalgeometrie wie auch im Hinblick auf die Anordnung der übrigen Sensorkomponenten schematisch gezeigt und mit Bezugszeichen 8 und 9 gekennzeichnett ist.

Die Soll-Anordnung der Sensorkomponente 6 ist definiert durch die Position der Sensorkomponente im Raum. Die Position der Sensorkomponente 6 im Raum kann beispielsweise entsprechend eines kartesischen X/Y/Z-Koordinatensystems bestimmt sein. Die Orientierung der Sensorkomponente 6 im Raum kann definiert sein durch die Orientierung der Wirkflächennormalen N relativ zu den Koordinatenvektoren X, Y und/oder Z. Die Soll-Anordnung der Sensorkomponente 6 kann ideal inmitten eines zulässigen Wertebereichs liegen und ideal im Hinblick auf eine oder mehrere Anordnungskriterien ausgerichtet sein. Es sei klar, dass auch andere mathematische Modell zur Bestimmung der Anordnung, d.h. der der Position und der Orientierung, verwendet werden können, beispielsweise ein Zylinderkoordinatensystem, ein Kugelkoordinatensystem, etc.

Beispielsweise ist die Sensorkomponente 6 gemäß der Sensorkomponenten-Soll- Anordnung im Hinblick auf einen zulässigen Wertebereich derart positioniert, dass die plane Wirkfläche 61, welche stirnseitig an der zylindrischen Sensorkomponenten 6 ausgebildet ist, innerhalb der Kanalwand 3 mit dem axialen Abstand zu der Innenkontur 4 des Messkanals 1 angeordnet ist. Der einfallende Sensorsignalpfad P_{E} trifft auf den konzentrischen Mittelpunkt der Wirkfläche 61, durch den auch die Normale N verläuft. Der Eingangswinkel α ist gleich dem Ausgangswinkel α relativ zu der Wirkflächennormalen N. Der ausgehende Signalverlauf P_{A} trifft auf den Mittelpunkt der weiteren Sensorkomponente 8.

Eine Sensorkomponente 6 kann im Allgemeinen als rotationssymmetrischer zylindrischen Körper gebildet sein, der eine flache Sensorwirkflächen oder Stirnfläche 61 aufweist. Der konzentrische Mittelpunkt der Sensorwirkflächen wird räumlich senkrecht zu der Wirkflächen 61 von der Wirkflächennormalen N gekreuzt. Der zylindrische Körper der Sensorkomponente 6 kann rotationssymmetrisch relativ zu der Wirkflächennormalen N gebildet sein. Zur genauen Positionierung der Sensorkomponente in axialer Richtung ihrer Wirkflächennormalen N kann eine radial zu der Wirkflächennormalen N quer vorstehender Vorsprung, wie eine Nase oder Schulter 62, vorgesehen sein. Der Vorsprung ist vorzugsweise an dem zur Wirkfläche 61 gegenüberliegenden axialen Ende der Sensorkomponente angeordnet. Die Schulter 62 der Sensorkomponente 6 kann dazu ausgebildet sein, auf eine Gegenanschlagsfläche 32 der Kanalwand 3 an der der Innenkontur 4 gegenüberliegenden Außenseite 33 der Kanalwand zu stoßen. In der Kanalwand 3 kann eine komplementär zu der zylindrischen Gestalt der Sensorkomponente 6 gebildete Aufnahme 36 vorgesehen sein, die beispielsweise gebohrt oder gefräst ist. Andere Formen der Sensorkomponente und der Aufnahme sind denkbar.

Wenn die Anordnung einer Sensorkomponente 6 relativ zu der Ist-Geometrie außerhalb eines zulässigen Wertebereichs liegt und/oder eine oder mehrere Anordnungskriterien nicht erfüllt, kann eine Neubestimmung der Anordnung der Sensorkomponente 6 durchgeführt werden.

Beispielsweise kann die Neubestimmung der Anordnung der Sensorkomponente unter Berücksichtigung eines zulässigen Wertebereichs durchgeführt werden. Wenn beispielsweise ein Positionsparameter der Sensorkomponente 6 nicht mit einem zulässigen Wertebereichs übereinstimmt, kann die Differenz zwischen die Positionsparameter und dem zulässigen Wertebereichs oder einem Optimalwert innerhalb des zulässigen Wertebereichs bestimmt werden und anhand der Differenz eine Neubestimmung der Soll-Positionsparameters der Sensorkomponente 6 durchgeführt werden. Eine Neubestimmung der Soll-Anordnung der Sensorkomponente anhand des Positionsparameters kann als Soll-Positionswert-Verschiebung bezeichnet sein.

Wenn die Soll-Anordnung der Sensorkomponente 6 angulär von einem zulässigen Wertebereich abweicht, beispielsweise wenn die Normale N der Sensorkomponente 6 relativ zum zulässigen Wertebereich verkippt, verschwenkt und/oder windschief ist, kann eine Neubestimmung der Orientierungsparameter der Sensorkomponenten 6 erfolgen. Zur Neubestimmung der Orientierungsparameter der Sensorkomponente kann beispielsweise eine Differenz zwischen dem Normalenvektor N senkrecht zu der Wirkfläche 61 und einem zulässigen Wertebereichs bestimmt werden und der Normalenvektor N anhand der Differenz neubestimmt werden.

Ein zulässiger Wertebereich kann bestimmt sein durch ein Anordnungskriterium oder durch mehrere Anordnungskriterien. Ein Anordnungskriterium bezeichnet einen Satz von Soll-Vorgaben bezüglich der Soll-Anordnung einer Sensorkomponente relativ zu der Soll-Anordnung wenigstens einer weiteren, anderen Sensorkomponente. Beispielsweise kann als Konfigurationskriterium vorbestimmt sein, dass die Wirkflächennormale einer Sensorkomponente den Wirkflächenmittelpunkt einer anderen Sensorkomponenten durchdringt.

Als ein Anordnungskriterium insbesondere bezüglich einer reflektierenden, passiven Sensorkomponenten kann vorgesehen sein, dass ein Sensorsignale-Strahlenpfad vorgesehen ist von wenigstens einer weiterer Sensorkomponente 8 zu wenigstens einen anderen weiteren Sensorkomponente 9, wobei der Sensorsignalpfad eine Reflexion an einer reflektierenden Sensor-Wirkflächen 61 der Sensorkomponente 6 erfährt. Gemäß einem Anordnungskriterium soll der Sensorsignalpfad-Eintrittswinkel α bzw. β_{E} des Sensorsignal-Eingangspfads P_{E} relativ zu der Wirkflächennormalen N gleich dem Austrittswinkel α bzw. β_{A} der Sensorsignal-Ausgangspfad P_{A} relativ zu der Wirkflächennormalen N sein.

Figur 4a zeigt die in Bezug auf die Soll-Geometrie der Kanalkontur 4s bestimmte Sensorkomponenten-Soll-Anordnung der Sensorkomponente 6 in Relation zu einer erfassten Ist-Geometrie der Kanalkontur 4_{I}. Bei dem abgebildeten Beispiel weicht die Ist-Kontur 4_{I} ab von der Soll-Kontur 4_{S} ab. Die Ist-Kontur 4_{I} ist in Bezug auf die Kanalmitte M in Radialrichtung R nach außen versetzt. Dies kann beispielsweise Folge von relativ groben Toleranzen eines Guss-Herstellungsverfahren des Messkanals 1 sein.

Infolge dessen, dass die Ist-Kontur 4_{I} von der Soll-Kontur 4_{S} abweicht, ragt die Soll-Anordnung der Sensorkomponenten 6 in das prozessfluidführende Kanalinnere hinein. Die Vorderkante 64 des der Sensorkomponente 6 bildet in Bezug auf die Kanalkontur 4_{I} einen in den Kanal hineinragende Vorsprung. Strömt Prozessfluid durch den Kanal 1, wird es durch den Vorsprung 64 umgelenkt, wobei sich Wirbel bilden können, die das Fluidverhalten beeinträchtigen und die die Messungen mittels der Sensorkomponenten 6 verfälschen können.

Anhand der erfassten Ist-Geometrie des Messkanals, beispielsweise der Kanal-Innenkontur 4, kann ein zulässiger Wertebereich definiert sein, welcher vorgibt, in welcher Positionsabstand die Stirnfläche 61, insbesondere die Vorderkante 64, relativ zu der Innenkontur 4_{I} angeordnet sein soll. Relativ zu diesem vorgegebenen zulässigen Wertebereich kann anhand der erfassten Ist-Geometrie der Kanalinnenkontur 4_{I} die eine Positionsabweichung Δt der Stirnfläche 61 bestimmt werden. Anhand der Positionsabweichung Δt kann anschließend die Soll-Position und somit die Soll-Anordnung der Sensorkomponente 6 derart neubestimmt werden, dass sie in den zulässigen Wertebereich fällt.

Die Erfassung der Ist-Geometrie kann beispielsweise gemäß dem folgenden Schema erfolgen:
Die Erfassung der Ist-Geometrie kann lokal an oder nahe einer zu erwartenden Position basierend auf der Soll-Anordnung der Sensorkomponenten 6 erfolgen. Beispielsweise kann die Erfassung der Ist-Geometrie stellenweise an der Soll-Position der gemäß Soll-Anordnung der Sensorkomponente 6 vorgesehenen Aufnahme 36 in der Kanalwand 3 erfolgen. Ist die Aufnahme 36 als Bohrung oder dergleichen vorgesehen, hat sie vorzugsweise eine zylindrische Gestalt, die rotationssymmetrisch um die Normale N ausgeformt ist. Anhand der vorbestimmten Soll-Geometrie kann rechnerisch eine Durchdringungskurve der Aufnahme 36 in Bezug auf die Innenkontur 4s bestimmt werden. Entlang der Durchdringungskurve können mehrere Stellen mittels eines Messtasters erfasst werden. Beispielsweise kann ein mechanischer Messtaster drei Punkte der Ist-Geometrie der Kanalwand 3 an der Innenkontur 4 ertasten.

Die Lage der Messpunkte kann rechnerisch auf Basis von drei bestimmten Punkten der Soll-Geometrie einer Innenkontur 4s ertastet werden. Diese drei Punkte können beispielsweise entlang der Durchdringungskurve 10° zueinander versetzt um die Normalen N sein. Von diesen drei Messpunkten kann in Bezug auf eine Axialrichtung relativ zu der Normalen N bestimmt werden, welcher der drei erfassten Punkte am tiefsten, d. h. in Bezug auf die Radialrichtung R des Kanals 1 am weitesten außen gelegen ist. Um diesen tiefsten Punkt herum können auf der Durchdringungskurve (der theoretischen Bohrungsumfangslinie) weitere Messungen vorgenommen werden, und zwar anhand einer Abschätzung in Relation zu der Normalen um +5° und -5° relativ zu den tiefsten Punkt versetzt. Anhand der drei um paarweise je 5° zu einander versetzten Messungen rund um den tiefsten Punkt kann anschließend mit höherer Präzision erneut ein bezüglich der Normalen N tiefster Punkt bestimmt werden. Ausgehend von diesem kann wiederum um den erneut halbierten Winkel (±2,5°) entlang der Durchdringungskurve versetzt weitere zwei Punkte erfasst werden. Dieses Verfahren kann mehrfach, mit iterativ zunehmender Winkelgenauigkeit erhöht werden. Es sei klar, dass für die iterative Genauigkeitszunahme anstelle des hier exemplarisch genannten Winkelhalbierung auch eine andere Verkleinerung des Winkelbereichs verwendet werden kann. Es sei klar, das auch andere dem Fachmann geläufige iterative Näherungsverfahren im Rahmen der Erfindung Anwendung finden können. Die Bestimmung eines tiefsten Punktes anhand von drei um kleiner werdender Winkel voneinander entlang der Durchdringungskurve versetzte Punkte kann so lange wiederholt werden, bis sich eine vorgegebene Toleranz zwischen dem tiefsten und dem zweittiefsten Punkt einstellt. Anhand von diesem tiefsten Punkt der Innenkontur 4_{I} der Ist-Geometrie wird der Abstand (die Positionsdifferenz) Δt der Stirnfläche 61 Sensorkomponente 6 relativ zu dem zulässigen Wertebereich bestimmt. Eine derartige Erfassung und Positions (Neu-)Bestimmung kann durchgeführt werden für eine passive Sensorkomponente oder eine aktive Sensorkomponente. Ein erfindungsgemäßes Verfahren kann eine Erfassung und (Neu-)Bestimmung einer oder mehrerer passiver Sensorkomponenten und/oder einer oder mehrerer aktiver Sensorkomponenten umfassen.

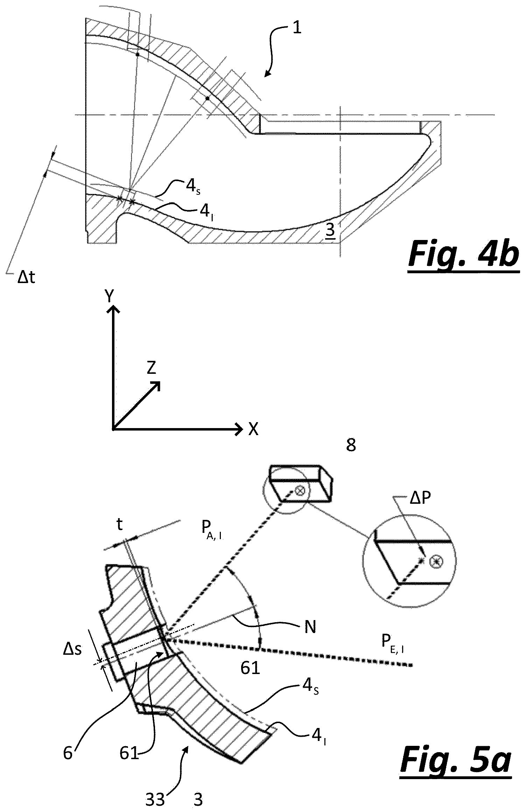

Figur 4b zeigt einen Kanal 1 im Eingangsbereich 103 eines Stellventilkörpers 100. In dem Messkanal 1 ist die Innenkontur 4_{I} bzw. 4s gemäß der gemessenen Ist-Geometrie bzw. der vorgegebenen Soll-Geometrie dargestellt und die um die Positionskorrektur Δt in Axialrichtung der Normalen N parallel verschobene neubestimmte Soll-Anordnung der Sensorkomponente 6 dargestellt.

Figur 5a zeigt einen Ausschnitt des Messkanals 11 mit einer Sensorkomponente 6, deren Soll-Anordnung eine Neubestimmung erfahren hat, wie in Figur 4b beschriebenen. Infolge der Parallelverschiebung in Axialrichtung der Normalen N trifft der einfallende Signalpfad P_{E} nicht auf den von der Normalen N durchdrungenen Mittelpunkt, insbesondere Kreismittelpunkt, der Sensorkomponente 6. Der von der Sensorkomponenten 6 an der Wirkflächen 61 reflektierte Signalpfad verläuft daher gegenüber dem Soll-Signalpfad (vgl. Figur 3) parallel versetzt und trifft nicht auf den anderen Sensorkomponente 8 sondern verfehlt diese. Der tatsächliche Auftreffpunkt des Signalpfades P_{E}, P_{A} ist quer zu der Sensornormalen N um einen translatorischen Abstand Δs versetzt.

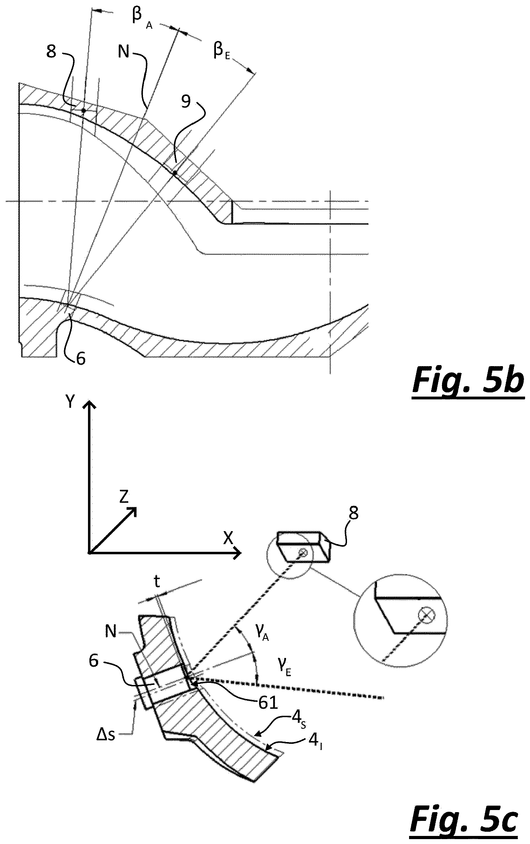

Figur 5b zeigt eine Neubestimmte Position der Sensorkomponente 6 in Bezug auf die Ist-Geometrie des Messkanals 11, wie in Figur 4a und 4b beschrieben, sowie im Hinblick auf die Anordnungskriterien, wonach der Signalpfad P_{E}, P_{A} mittig entsprechend der Durchdringungslinie der Normalen N auf die Wirkflächen 61 Sensorkomponente 6 treffen soll. Dazu wird die Position der Sensorkomponente neu bestimmt, indem eine translatorische Verschiebung der Sensorkomponente 6 entsprechend der translatorischen Differenz Δs vorgegeben wird. Es werden theoretische Eintrittswinkel β_{E} und Austrittswinkel β_{A} bestimmt, welche bezogen sind auf den Mittelpunkt der anderen Sensorkomponenten 8 und 9. Infolge des Versatzes um Δs ist der theoretische Einfallwinkel β_{E} größer als der theoretische Ausfallwinkel βn. Anschließend wird anhand des Konfigurationskriteriums, wonach Eintritts- und Austrittswinkel gleich groß sein sollen, wird die Orientierung der Sensorkomponente 6 derart neu bestimmt, dass die Normale eine Winkelhalbierende bezüglich neubestimmten Eintritts- und Austrittswinkel ε bildet. Diese neu bestimmte Anordnung der Sensorkomponenten 6 ist in Figur 5c dargestellt.

Figur 5c zeigt die Ergebnis der mehrfachen Neubestimmung der Anordnung, d. h. der Positionierung und Orientierung der Sensorkomponente 6 bezug auf die Ist-Geometrie des Messkanals 11 und im Hinblick auf die Anordnungskriterien. Ausgehend von der Anordnung der Neuanordnung der Sensorkomponente 6 kann eine erneute Überprüfung stattfinden, ob die entsprechend den Anordnungskriterien neu angeordnete Sensorkomponente 6 in dem vorgegebenen zulässigen Wertebereichs liegt. Gemäß dem zulässigen Wertebereich soll die Wirkseite 61 der Sensorkomponente 6 von der Innenkontur 4_{I} gemäß der Ist-Geometrie hinreichend weit entfernt sein. Nötigenfalls kann bei einer weiteren Neubestimmung der Position der Sensorkomponente 6 in Bezug auf die zulässige Wertebereich auch eine Neubestimmung der Anordnung der Sensorkomponente 6 im Hinblick auf die Anordnungskriterien erfolgen. Wird eine hinreichende Übereinstimmung der Sensorkomponenten-Ist-Anordnung mit dem zulässigen Wertebereichs und/oder den Anordnungskriterien festgestellt, kann eine Fertigung des Messkanals mit der darin angeordneten Sensorkomponenten 6 erfolgen.

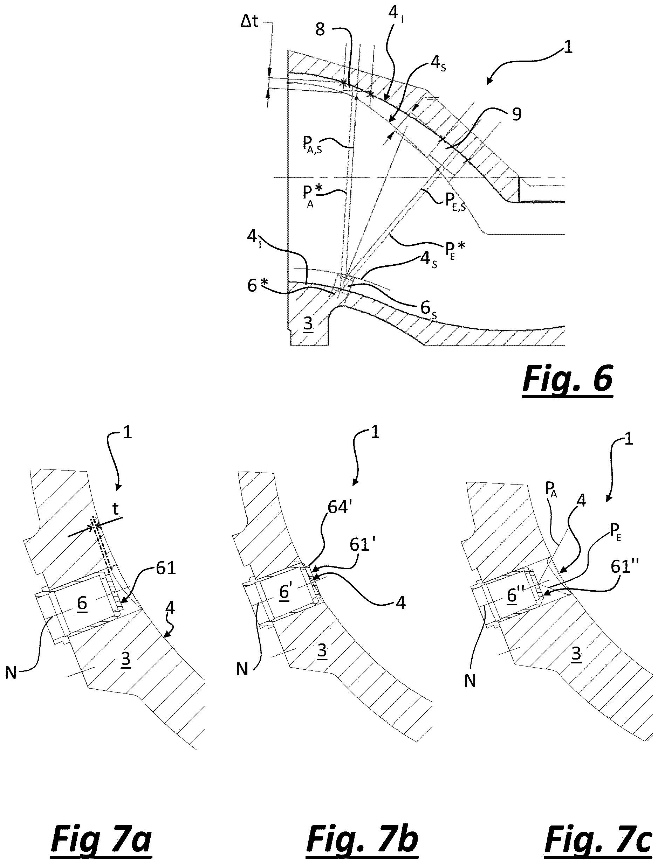

In Figur 6 ist angedeutet, dass im Anschluss an die Neubestimmung der Anordnung der Sensorkomponente 6 eine Neubestimmung der Anordnung einer oder mehrerer anderer Sensorkomponenten 8, 9 erfolgt. Die Neubestimmung der Anordnung der anderen Sensorkomponente 8 kann vorzugsweise mit einem zulässigen Wertebereich und/oder anhand von Anordnungskriterien als Zielvorgabe erfolgen, die den oben beschriebenen entsprechen. Die andere weitere Sensorkomponente 9 kann eine entsprechende Neubestimmung ihrer Soll-Anordnung erfahren. Die theoretische Neubestimmung der Sensorkomponenten-Soll-Anordnung einer oder mehreren Sensorkomponenten-Soll-Anordnungen bzw. die Neubestimmung von den Anordnungsparametern einer Sensorschar umfassend mehrerer Sensorkomponenten (beispielsweise dieser Sensoren 6, 8 und 9) kann iterativ in mehreren aufeinander folgenden Schritten und gegebenenfalls mehreren wiederholenden Schleifen erfolgen.

Figur 7a zeigt einen im Hinblick auf einen zulässigen Wertebereich angeordnete Sensorkomponente 6 in der Kanalwand 3 eines Messkanals. Die gesamte Sensorkomponente 6 einschließlich der stirnseitigen Wirkflächen 61 befindet sich bezüglich der Kanalinnenseite 4 nach außen in die Kanalwand 3 hinein versetzt. Durch die wie in Figur 7a dargestellt angeordnete Sensorkomponente 6 wird die Strömung des Prozessfluides in dem Messkanal 11 nicht gestört.

Figur 7b zeigt eine falsch positionierte Sensorkomponente 6'. Deren Wirkfläche 61 durchdringt die Kontur 4 des Strömungskanals und ragt ins Innere des Messkanals 1 hinein. An der vorstehenden Kante 64' der falsch positioniert Sensorkomponente 6' können störende Strömungserscheinungen auftreten, welche die Messgenauigkeit stark beeinträchtigen können.

Eine andere Sensorkomponente 6", welche sich außerhalb eines zulässigen Wertebereichs befindet, ist dargestellt in Figur 7c. Die falsch angeordnete Sensorkomponente 6" ist in Axialrichtung ihrer Normalen N in Bezug auf in Kontur 4 so weit zurück versetzt, dass der theoretische Strahlengang des Signalpfades P_{A}, P_{E} mit der Kanalwand 3 kollidiert und der praktische Strahlengang dadurch unterbrochen wäre. Bei der falsch positioniert Sensorkomponente 6" kann keine Messung erfolgen. Infolgedessen ist der zulässige Wertebereich auch im Hinblick auf einen maximalen Abstand der Wirkflächen der Sensorkomponente in Bezug auf die Innenkontur 4 einer Ist-Geometrie Messkanals 1 bestimmt.

Der Verlauf einer Ausführung eines erfindungsgemäßen Verfahrens kann umfassen, dass eine einer der Soll-Geometrie des Messkanals 1 zugeordnete Sensorschar-Soll-Anordnung bereitgestellt wird. Die Sensorschar-Soll-Anordnung kann bezüglich der Sensorkomponenten räumlich bestimmte Positionsparameter und Orientierungsparameter umfassen: Beispielsweise kann anhand von zwei Koordinatenpunkten in einem kartesischen Koordinatensystem die Orientierungsparameter einer ersten aktiven Sensorkomponente 59 vorgegeben sein, wobei als Positionsparameter der ersten aktiven Sensorkomponente zumindest teilweise vorbestimmt sein kann, dass die ersten aktive Sensorkomponente 59 auf der Geraden entlang der Orientierung durch die beiden Koordinatenpunkte liegt. Anhand von jeweils zwei anderen Koordinatenpunktepaaren in dem Koordinatensystem können vorläufige soll-Positionsparameter und soll-Orientierungsparameter von zwei passiven Sensorkomponenten 53, 57 der Sensorschar bereitgestellt sein.

Insbesondere kann das Stellventilgehäuse mit dem Messkanal derart ortsfest gehalten werden, dass die Stellrichtung (translatorische Bewegungsrichtung des Ventilglieds 109; vgl. Fig. 1) des Stellventilgehäuses korrespondierend zu einer ersten Achse, beispielsweise einer Y-Achse, eines kartesischen Koordinatensystems von theoretischen Soll-Anordnungsparametern der wenigstens einen Sensorschar 50, 70 angeordnet ist. Alternativ oder zusätzlich kann das Stellventilgehäuse mit dem Messkanal derart ortsfest gehalten werden, dass die Gehäuseachse (durch den Mittelpunkt des Prozessfluideingangs 103 und/oder Prozessfluidausgangs 105) zu einer zweiten Achse, beispielsweise einer X-Achse, eines kartesischen Koordinatensystems von theoretischen Soll-Anordnungsparametern der wenigstens einen Sensorschar 50, 70 angeordnet ist.

Bei dieser Ausführung eines erfindungsgemäßen Verfahrens kann zunächst für die erste passive Sensorkomponente 53 geprüft werden, ob die Soll-Anordnung relativ zu der Ist-Geometrie des Messkanals 1 innerhalb eines zulässigen Wertebereichs liegt. Dazu kann entlang der vorläufigen Achse entsprechend der soll-Positions- und soll-Orientierungsparameter der Sensorkomponente 53 wie oben bezüglich Figur 4a beschrieben die Ist-Geometrie des Messkanals 1 bei der Soll-Position der Sensorkomponente 53 mit einem beispielsweise mechanischen Messtaster bestimmt werden. Anhand eines Abgleichs mit den theoretischen Daten der Soll-Anordnung der Sensorkomponente 53 kann anhand eines Anordnungskriteriums, beispielsweise eines Soll-Abstands von der Wirkfläche 61 der Sensorkomponente 53 zur Kanalinnenseite 41, die Soll-Anordnung der Sensorkomponente 53 neu bestimmt werden.

Anschließend kann mit einem beispielsweise mechanischen Messtaster die Ist-Geomentrie bei der Soll-Position der nächsten passiven Sensorkomponente 57 erfasst werden. Bei dem vorliegenden Prozessbeispiel sei angenommen, dass die nächste passive Sensorkomponente 57 gebildet ist durch eine Reflexionsebene oder Spiegelfläche, die als ein planarer, ebener Abschnitt der Kanalinnenseite 4 gefertigt ist. Die Reflexionsebene kann beispielsweise durch Fräsen und/oder Polieren eines Abschnitts der Kanalwand 3 an der Kanalinnenseite 4 gefertigt sein. Bei dieser Ausführung werden bei der Erfassung der Ist-Geometrie der Kanalinnenseite 4 sogleich die Ist-Anordnungsparameter der Sensorkomponente 57 erfasst. Diese sind bei dem vorliegenden Prozessbeispiel als Anordnungskriterium zu werten, die nicht neu-bestimmbar sind. Vielmehr sind andere Positionsparameter und/oder Orientierungsparameter unter Berücksichtigung der Ist-Anordnungsparameter der Sensorkomponente 57 neu zu bestimmen, sofern diese anderen Anordnungsparameter anderenfalls nicht in einen jeweiligen zulässigen Wertebereich fallen. Gemäß eines alternativen Prozesses ist es auch denkbar, dass im Laufe des Verfahrens einmal (neu) Bestimmte Sensorkomponenten Anordnungsparameter für das weitere Verfahren entsprechend einem zwingend zu gewährleistenden Ist-Anordnungsparameter zu berücksichtigen sind.

Bezogen auf die Ist-Anordnungsparameter der Sensorkomponente 57 wird bei dem vorliegenden exemplarischen Ausführung anschließend der Orientierungsparameter und gegebenenfalls der Positionsparameter der ersten passiven Sensorkomponente 53 anhand von vorbestimmten Anordnungskriterien überprüft. Falls ein oder mehrere Anordnungskriterien, beispielsweise die Reflexionsregel, unter Berücksichtigung der Ist-Anordnungsparameter der weiteren Sensorkomponente 57 nicht in einem zulässigen Wertebereich liegen, werden die Soll-Anordnungsparameter der Sensorkomponente 53 basierend auf den Anordnungskriterien gegebenenfalls zumindest teilweise (unter Umständen eines oder mehrere weitere Male) neu Bestimmt.

Bei dem vorliegenden Prozessbeispiel wird anschließend, in beliebiger Reihenfolge, anhand des nach Strahlengangs nach Erfassen der Ist-Anordnungsparameter der Sensorkomponente 57 und Neubestimmung der Soll-Anordnungsparameter der Sensorkomponente 53 die Soll-Positionsparameter der ersten aktiven Sensorkomponente 59 und der zweiten aktiven Sensorkomponente 51 geprüft und gegebenenfalls entlang des Strahlengangs neu Bestimmt.

Dabei können auch die Soll-Orientierungsparameter der zweiten aktiven Sensorkomponenten 51 neu bestimmt werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Messkanal
- 3: Kanalwand
- 4: Kanalinnenseite, Innenkontor
- 4_{I}: Ist-Kontur
- 4_{S}: Soll-Kontur
- 6: Sensorkomponente
- 8, 9: weitere Sensorkomponente
- 32: Gegenanschlagsfläche
- 33: Außenseite
- 36: Aufnahme
- 50: erste Sensorschar
- 51: erste aktive Sensorkomponente
- 53, 57: passive Sensorkomponente
- 59: weitere aktive Sensorkomponente
- 61: Wirkfläche
- 62: Schulter
- 64: Vorderkante
- 70: zweite Sensorschar
- 71: zweite passive Sensorkomponente
- 73, 75: passive Sensorkomponente
- 79: zweite weitere aktive Sensorkomponente

- 100: Stellventilgehäuse
- 103: Prozessfluideingang
- 105: Prozessfluidausgang
- 107: Ventilsitz
- 109: Ventilglied
- 111: Aktor
- 200: Stellventil

- t: Abstand
- M: Mittelpunktkurve
- N: Wirkflächennormale
- P₅₀, P₇₀, P_{A}, P_{E}: Sensor-Signalpfad
- R: Radialrichtung

- α, ε: Eingangs- und Ausgangswinkel
- β_{E}: Eintrittswinkel
- β_{A}: Austrittswinkel
- Δs: translatorischer Abstand
- Δt: Axialabstand

## Patentansprüche

1. Verfahren zum räumlichen Anordnen wenigstens einer Sensorschar (50, 70) umfassend wenigstens zwei Sensorkomponenten (6, 8, 9, 51, 53, 57, 59, 71, 73, 75, 79) in einem Messkanal (1), umfassend die Schritte:
a) bereitstellen einer vorbestimmten Soll-Geometrie des Messkanals (1)
b) bereitstellen einer der Soll-Geometrie des Messkanals (1) zugeordneten Sensorschar-Soll-Anordnung, wobei die Sensorschar-Soll-Anordnung bezüglich der Sensorkomponenten räumlich bestimmte Positionsparameter und Orientierungsparameter umfasst,
c) zumindest stellenweise erfassen einer Ist-Geometrie des Messkanals (1)
d) Prüfung, ob wenigstens ein Positionsparameter oder Orientierungsparameter der Sensorschar-Soll-Anordnung bezüglich der Ist-Geometrie außerhalb eines zulässigen Wertebereichs liegt, wobei, falls anhand der Prüfung wenigstens ein Positionsparameter oder Orientierungsparameter der Sensorschar-Soll-Anordnung relativ zu der Ist-Geometrie außerhalb eines zulässigen Wertebereichs liegt, dieser Positions- oder Orientierungsparameter der Sensorschar-Soll-Anordnung unter Einhaltung des zulässigen Wertebereichs neu bestimmt wird; und wobei anhand wenigsten eines vorbestimmter Anordnungskriteriums wenigstens ein weiterer Positions- und/oder Orientierungsparameter der Sensorschar-Soll-Anordnung neu bestimmt wird und anschließend Schritt d) wiederholt wird,
e) Anordnen der Sensorkomponenten der Sensorschar (50, 70) in dem Messkanal (1) entsprechend der aktuellsten Sensorschar-Soll-Anordnung.

2. Verfahren nach Anspruch 1, ferner umfassend eine Bereitstellung eines insbesondere gekrümmten Messkanals (1) und ein ortsfestes Halten des Messkanals (1), wobei insbesondere der Messkanal (1) zumindest während der Schritte c) bis e) ortsfest gehalten wird, wobei insbesondere
dass Schritt c) ein optisches und/oder mechanisches Abtasten der Ist-Geometrie des Messkanals (1) umfasst, wobei insbesondere
Schritt c) umfasst, dass die Positions- und/oder Orientierungsparameter einer als Abschnitt der Kanalinnenseite (4) gebildeten Reflexionsebene erfasst werden, wobei die Reflexionsebene als passive Sensorkomponente (57, 75) wirkt.

3. Verfahren nach Anspruch 2, **dadurch gekennzeichnet, dass** Schritt e) umfasst, dass die wenigstens eine Aufnahme (36) für die wenigstens eine Sensorkomponente (6, 8, 9, 51, 53, 57, 59, 71, 73, 75, 79) oder mehreren Sensorkomponenten insbesondere durch Erodieren, Bohren und/oder Fräsen erzeugt werden, wobei insbesondere
die Aufnahme (36) mit einem Axialanschlag für die wenigstens eine Sensorkomponente (6, 8, 9, 51, 53, 57, 59, 71, 73, 75, 79) gebildet wird.

4. Verfahren nach einem der Ansprüche 1 bis 3, **dadurch gekennzeichnet, dass** Schritt d) umfasst, dass ein erster Positionsparameter anhand einer translatorischen Verschiebung in Axialrichtung einer der Sensorkomponenten (6, 8, 9, 51, 53, 57, 59, 71, 73, 75, 79) neu bestimmt wird,
wobei insbesondere ein vorbestimmter axialer Soll-Abstand der Wirkfläche (61) der Sensorkomponente (6, 8, 9, 51, 53, 57, 59, 71, 73, 75, 79) relativ zu einer Kanalinnenseite (4) des Messkanals (1) berücksichtigt wird.

5. Verfahren nach einem der Ansprüche 1 bis 4, **dadurch gekennzeichnet, dass** der erste Orientierungsparameter anhand einer rotatorischen Verschwenkung der ersten Sensorkomponente (6, 8, 9, 51, 53, 57, 59, 71, 73, 75, 79) um den Positionsparameter der ersten Sensorkomponenten (6, 8, 9, 51, 53, 57, 59, 71, 73, 75, 79) neu bestimmt wird, wobei insbesondere die Neubestimmung des ersten Positions- und/oder Orientierungsparameters der ersten Sensorkomponente (6, 8, 9, 51, 53, 57, 59, 71, 73, 75, 79) anhand eines Strahlengangs von einem Mittelpunkt einer Wirkfläche einer weiteren Sensorkomponente (6, 8, 9, 51, 53, 57, 59, 71, 73, 75, 79) zu einer zweiten Wirkfläche einer weiteren Sensorkomponente (6, 8, 9, 51, 53, 57, 59, 71, 73, 75, 79) und/oder anhand eines vorbestimmten axialen Soll-Abstands der ersten Wirkfläche der ersten Sensorkomponente (6, 8, 9, 51, 53, 57, 59, 71, 73, 75, 79) relativ zu einer Kanalinnenseite (4) des Messkanals (1) bestimmt wird.

6. Verfahren nach einem der Ansprüche 4 oder 5, **dadurch gekennzeichnet, dass** die erste Sensorkomponente eine passive Sensorkomponente (6, 8, 9, 51, 59, 71, 79) ist.

7. Verfahren nach einem der Ansprüche 1 bis 10, **dadurch gekennzeichnet, dass** Schritt d) umfasst, dass der weitere Positionsparameter anhand einer translatorischen Verschiebung in Axialrichtung einer weiteren Sensorkomponenten (6, 8, 9, 51, 53, 57, 59, 71, 73, 75, 79) neu bestimmt wird, wobei insbesondere die weitere Sensorkomponente eine aktive Sensorkomponente (6, 8, 9, 53, 57, 73, 75) ist.

8. Verfahren nach einem der Ansprüche 1 bis 7, wobei keine Sensorkomponente (6, 8, 9, 51, 53, 57, 59, 71, 73, 75, 79) die Kanalinnenseite (4) des Messkanals (1) durchdringt und/oder wobei die Sensorkomponenten innerhalb einer Kanalwand (3) des Messkanals (1) angeordnet werden und/oder wobei eine passive Sensorkomponente (57/75) als Abschnitt der Kanalinnenseite (4) des Messkanals (1) ausgebildet ist.

9. Verfahren nach einem der Ansprüche 1 bis 8, wobei die Prüfung gemäß Schritt d) in einer ersten Prüfungsphase für bezogen auf wenigstens eine passive Sensorkomponente (53, 57, 73, 79) durchgeführt wird und danach in einer zweiten Prüfungsphase die Prüfung gemäß Schritt d) bezogen auf wenigstens eine aktive Sensorkomponente (6, 8, 9, 51, 59, 71, 79) durchgeführt wird, wobei in der zweiten Prüfungsphase die Prüfung gemäß Schritt d) zuerst bezogen auf eine erste von wenigstens zwei aktiven Sensorkomponenten (6, 8, 51, 71) und danach bezogen auf eine zweite von wenigstens zwei aktiven Sensorkomponenten (6, 8, 59, 79) durchgeführt wird.

10. Messkanal (1) hergestellt mit dem Verfahren nach einem der Ansprüche 1 bis 9.

11. Stellventilgehäuse (100) für ein Stellventil (200) einer prozesstechnischen Anlage, wie ein Kraftwerk, eine petrochemische Anlage, eine Lebensmittel verarbeitenden Anlage oder dergleichen, umfassend einen Prozessfluideingang (103), einen Prozessfluidausgang (105) und einen zwischen Prozessfluideingang (103) und Prozessfluidausgang (105) angeordneten verschließbaren Ventilsitz (107), wobei das Stellventilgehäuse (100) zumindest abschnittsweise als Messkanal (1) nach Anspruch 10 gebildet ist, wobei insbesondere der Messkanal (1) am Prozessfluideingang (103) und/oder am Prozessfluidausgang (105) angeordnet ist.

12. Stellventil (200) zum Einstellen einer Prozessfluidströmung einer Prozesstechnischen Anlage, wie ein Kraftwerk, eine petrochemische Anlage, eine Lebensmittel verarbeitenden Anlage oder dergleichen, umfassend ein Stellventilgehäuse (100) nach Anspruch 11 und ein bewegliches Ventilglied (109) zum Schließen des Ventilsitzes (107), insbesondere ferner umfassend einen pneumatischen, hydraulischen oder elektrischen Aktor (111) zum Betätigen des Ventilglieds (109) und/oder eine Stell- und/oder Regelungselektronik zum Steuern des Aktors (111).

## Claims

1. Process for spatially arranging at least one sensor array (50, 70) comprising at least two sensor components (6, 8, 9, 51, 53, 57, 59, 71, 73, 75, 79) in a measuring channel (1), comprising the steps:
a) providing a predetermined desired geometry of the measuring channel (1);
b) providing a desired-sensor-array-arrangement associated with the desired geometry of the measuring channel (1), wherein the desired-sensor-array-arrangement comprises spatially defined positioning parameters and orienting parameters in regard to the sensor components;
c) capturing and actual geometry of the measuring channel (1) at least in places,
d) determination, if at least one of positioning parameter or orienting parameter of the desired-sensor-array-arrangement lies outside of an admissible value range in relation to the actual geometry, wherein, in case at least one positioning parameter or orienting parameter does lie outside of the admissible value range based on the determination, this positioning parameter or orienting parameter of the desired-sensor-array-arrangement is redefined in compliance with the admissible value range and wherein at least one further positioning parameter and/or orienting parameter of the desired-sensor-array-arrangement is redefined on the basis of at least one predefined arrangement criterion, and subsequently step d) is repeated,
e) arranging the sensor components of the sensor array (50, 70) in the measuring channel (1) according to the most current desired-sensor-array-arrangement.

2. Process according to claim 1, further comprising the provision of at least one particularly curved measuring channel (1) and stationary holding of the measuring channel (1), wherein in particular the measuring channel (1) is held stationary at least during the steps c) to e), wherein in particular
step c) comprises optically and/or mechanically scanning the actual geometry of the measuring channel (1), wherein in particular
step c) comprises, that the positioning parameters and/or the orienting parameters of the reflection plane formed as a section of the inner channel surface (4) are captured, wherein the reflection plane acts as a passive sensor component (57, 75).

3. Process according to claim 2, **characterized in that** step e) comprises that the at least one reception (36) for the at least one sensor component (6, 8, 9, 51, 53, 57, 59, 71, 73, 75, 79) or for the multiple sensor components is realized, in particular through eroding, drilling and/or milling, wherein in particular
the reception (36) is formed with an axial stop for the at least one sensor component (6, 8, 9, 51, 53, 57, 59, 71, 73, 75, 79).

4. Process according to one of the claims 1 to 3, **characterized in that** step d) comprises, that a first positioning parameter is redefined according to a translational shift in the axial direction of one of the sensor components (6, 8, 9, 51, 53, 57, 59, 71, 73, 75, 79),
wherein in particular a predetermined axial desired distance of the effective surface (61) of the sensor component (6, 8, 9, 51, 53, 57, 59, 71, 73, 75, 79) in relation to an inner channel surface (4) is considered.

5. Process according to one of the claims 1 to 4, **characterized in that** the first orienting parameter is redefined according to a rotational turn of the first sensor component (6, 8, 9, 51, 53, 57, 59, 71, 73, 75, 79) around the positioning parameter of the first sensor component (6, 8, 9, 51, 53, 57, 59, 71, 73, 75, 79), wherein in particular the redefinition of the first positioning parameter and/or of the first orienting parameter of the first sensor component (6, 8, 9, 51, 53, 57, 59, 71, 73, 75, 79) is defined according to a beam path from a center point of an effective surface of the further sensor component (6, 8, 9, 51, 53, 57, 59, 71, 73, 75, 79) to a second effective surface of the further sensor component (6, 8, 9, 51, 53, 57, 59, 71, 73, 75, 79) and/or according to a predefined axial desired distance of the first effective surface of the first sensor component (6, 8, 9, 51, 53, 57, 59, 71, 73, 75, 79) in relation to an inner channel surface (4) of the measuring channel (1).

6. Process according to one of the claims 4 or 5, **characterized in that** the first sensor component is a passive sensor component (6, 8, 9, 51, 59, 71, 79).

7. Process according to one of the claims 1 to 10, **characterized in that** step d) comprises that the further positioning parameter is redefined according to a translational shift in the axial direction of a further sensor component (6, 8, 9, 51, 53, 57, 59, 71, 73, 75, 79), wherein in particular the further sensor component is an active sensor component (6, 8, 9, 53, 57, 73, 75).

8. Process according to one of the claims 1 to 7, wherein none of the sensor components (6, 8, 9, 51, 53, 57, 59, 71, 73, 79) in an inner channel surface (4) of the measuring channel (1) and/or wherein the sensor components are arranged within a channel wall (3) of the measuring channel (1) and/or wherein a passive sensor component (57/75) is formed as a section of the inner channel surface (4) of the measuring channel (1).

9. Process according to one of the claims 1 to 8, wherein, during a first determination period, the determination according to step d) is performed in regard to at least one passive sensor component (53, 57, 73, 79), and subsequently, during a second determination period, the examination according to step d) is performed with regard to an active sensor component (6, 8, 9, 51, 59, 71, 79), wherein in the second determination period, the determination according to step d) is performed at first regarding a first of at least two active sensor components (6, 8, 51, 71) and thereafter in regard to a second of at least two active sensor components (6, 8, 59, 79).

10. Measuring channel manufactured by the method according to one of claims 1 to 9.

11. Control valve housing (100) for a control valve (200) of a process plant, such as a power plant, a petrochemical plant, a food processing plant or the like, comprising a process fluid inlet (103), a process fluid outlet (105) and a closable valve seat (107) arranged between the process fluid inlet (103) and the process fluid outlet (105), wherein the control valve housing (100) is formed at least in sections as a measuring channel (1) according to claim 10, wherein in particular the measuring channel (1) is arranged at the process fluid inlet (103) and/or at the process fluid outlet (105).

12. Control valve (200) for adjusting a process fluid flow of a process plant, such as a power plant, a petrochemical plant, a food processing plant or the like, comprising a control valve housing (100) according to claim 11 and a movable valve member (109) for closing the valve seat (107), in particular further comprising a pneumatic, hydraulic or electric actuator (111) for actuating the valve member (109) and/or actuation and/or control electronics for controlling the actuator (111).

## Revendications

1. Procédé, destiné à placer dans l'espace au moins un groupe de capteurs (50, 70), comprenant au moins deux composants de capteur (6, 8, 9, 51, 53, 57, 59, 71, 73, 75, 79) dans un canal de mesure (1), comprenant les étapes consistant à :
a) mettre à disposition une géométrie idéale prédéfinie du canal de mesure (1)
b) mettre à disposition une configuration idéale de groupe de capteurs, associée à la géométrie idéale du canal de mesure (1), la configuration idéale de groupe de capteurs comprenant en rapport des composants de capteur des paramètres de position et des paramètres d'orientation déterminés dans l'espace,
c) détecter au moins par endroits une géométrie réelle du canal de mesure (1)
d) vérifier si au moins un paramètre de position ou un paramètre d'orientation de la configuration idéale de groupe de capteurs se situe en rapport à la géométrie réelle hors d'une plage de valeurs admissible, si au vu de la vérification, au moins un paramètre de position ou paramètre d'orientation de la configuration idéale de groupe de capteurs se situe en rapport à la géométrie réelle hors d'une plage de valeurs admissible, ledit paramètre de position ou paramètre d'orientation de la configuration idéale de groupe de capteurs étant redéterminé, sous respect de la plage de valeurs admissible ; et à l'aide d'au moins un critère de configuration prédéfini, au moins un autre paramètre de position ou paramètre d'orientation de la configuration idéale de groupe de capteurs étant redéterminé et par la suite, l'étape d) étant réitérée,
e) placer les composants de capteur du groupe de capteurs (50, 70) dans le canal de mesure (1) en fonction de la configuration idéale de groupe de capteurs la plus actuelle.

2. Procédé selon la revendication 1, comprenant par ailleurs une mise à disposition d'un canal de mesure (1) notamment incurvé et d'un maintien stationnaire du canal de mesure (1), notamment le canal de mesure (1) étant maintenu de manière stationnaire au moins pendant les étapes c) à e), notamment
l'étape c) comprenant un balayage optique et/ou mécanique de la géométrie réelle du canal de mesure (1), notamment
l'étape c) comprenant que les paramètres de position et/ou paramètres d'orientation d'un plan de réflexion conçu en tant qu'un segment de la face intérieure (4) de canal sont détectés, le plan de réflexion agissant en tant que composant de capteur (57, 75) passif.

3. Procédé selon la revendication 2, **caractérisé en ce que** l'étape e) comprend, que l'au moins un logement (36) pour l'au moins un composant de capteur (6, 8, 9, 51, 53, 57, 59, 71, 73, 75, 79) ou plusieurs composants de capteur est créé notamment par érodage, perçage et/ou fraisage, notamment
le logement (36) étant créé avec une butée axiale pour l'au moins un composant de capteur (6, 8, 9, 51, 53, 57, 59, 71, 73, 75, 79).

4. Procédé selon l'une quelconque des revendications 1 à 3, **caractérisé en ce que** l'étape d) comprend qu'un premier paramètre de position est redéterminé par un déplacement en translation dans la direction axiale de l'un des composants de capteur (6, 8, 9, 51, 53, 57, 59, 71, 73, 75, 79),
notamment un écart axial idéal prédéfini de la surface active (61) du composant de capteur (6, 8, 9, 51, 53, 57, 59, 71, 73, 75, 79) par rapport à une face intérieure (4) de canal du canal de mesure (1) étant pris en compte.

5. Procédé selon l'une quelconque des revendications 1 à 4, **caractérisé en ce que** le premier paramètre d'orientation est redéterminé par un pivotement en rotation du premier composant de capteur (6, 8, 9, 51, 53, 57, 59, 71, 73, 75, 79) de la valeur du paramètre de position du premier composant de capteur (6, 8, 9, 51, 53, 57, 59, 71, 73, 75, 79), notamment la redétermination du premier paramètre de position et/ou du paramètre d'orientation du premier composant de capteur (6, 8, 9, 51, 53, 57, 59, 71, 73, 75, 79) étant déterminée à l'aide d'une trajectoire de faisceau, d'un point médian d'une surface active d'un autre composant de capteur (6, 8, 9, 51, 53, 57, 59, 71, 73, 75, 79) vers une deuxième surface active d'un autre composant de capteur (6, 8, 9, 51, 53, 57, 59, 71, 73, 75, 79) et/ou à l'aide d'un écart axial idéal prédéfini de la première surface active du premier composant de capteur (6, 8, 9, 51, 53, 57, 59, 71, 73, 75, 79) par rapport à une face intérieure (4) de canal du canal de mesure (1) .

6. Procédé selon l'une quelconque des revendications 4 ou 5, **caractérisé en ce que** le premier composant de capteur est un composant de capteur (6, 8, 9, 51, 59, 71, 79) passif.

7. Procédé selon l'une quelconque des revendications 1 à 10, **caractérisé en ce que** l'étape d) comprend que l'autre paramètre de position est redéterminé par un déplacement en translation dans la direction axiale d'un autre composant de capteur (6, 8, 9, 51, 53, 57, 59, 71, 73, 75, 79), notamment l'autre composant de capteur étant un composant de capteur (6, 8, 9, 53, 57, 73, 75) actif.

8. Procédé selon l'une quelconque des revendications 1 à 7, aucun composant de capteur (6, 8, 9, 51, 53, 57, 59, 71, 73, 75, 79) ne traversant la face intérieure (4) de canal du canal de mesure (1) et/ou les composants de capteur étant placés à l'intérieur d'une paroi de canal (3) du canal de mesure (1) et/ou un composant de capteur (57/75) passif étant conçu en tant que segment de la face intérieure (4) de canal du canal de mesure (1).

9. Procédé selon l'une quelconque des revendications 1 à 8, la vérification selon l'étape d) étant réalisée lors d'une première phase de vérification en rapport à au moins un composant de capteur (53, 57, 73, 79) passif et ensuite, lors d'une deuxième phase de vérification, la vérification selon l'étape d) étant réalisée en rapport à au moins un composant de capteur (6, 8, 9, 51, 59, 71, 79) actif, dans la deuxième phase de vérification, la vérification selon l'étape d) étant réalisée d'abord en rapport à un premier parmi au moins deux composants de capteur (6, 8, 51, 71) actifs et ensuite en rapport à un deuxième parmi au moins deux composants de capteur (6, 8, 59, 79) actifs.

10. Canal de mesure (1), fabriqué d'après le procédé selon l'une quelconque des revendications 1 à 9.

11. Corps (100) de vanne de régulation pour une vanne de régulation (200) d'une installation technique de procédé, comme une centrale électrique, une installation pétrochimique, une installation de traitement de produits alimentaires ou analogues, comprenant une entrée (103) de fluide de procédé, une sortie (105) de fluide de procédé et un siège de vanne (107) fermable, placé entre l'entrée (103) de fluide de procédé et la sortie (105) de fluide de procédé, le corps (100) de vanne de régulation étant conçu au moins par endroits en tant que canal de mesure (1) selon la revendication 10, notamment le canal de mesure (1) étant placé sur l'entrée (103) de fluide de procédé et/ou sur la sortie (105) de fluide de procédé.

12. Vanne de régulation (200), destinée à régler un flux de fluide de procédé d'une installation technique de procédé, comme une centrale électrique, une installation pétrochimique, une installation de traitement de produits alimentaires ou analogues, comprenant un corps (100) de vanne de régulation selon la revendication 11 et un élément de valve (109), destiné à fermer le siège de vanne (107), comprenant notamment par ailleurs un actionneur (111) pneumatique, hydraulique ou électrique pour actionner l'élément de vanne (109) et/ou une électronique de réglage et/ou de régulation, destinée à commander l'actionneur (111).
